# EUROPÄISCHE PATENTSCHRIFT

(11) **EP 1 298 364 B1**
(45) Veröffentlichungstag und Bekanntmachung des Hinweises auf die Patenterteilung: **22.06.2005**
(21) Anmeldenummer: 01128978.2
(22) Anmeldetag: 06.12.2001
(51) Int. Cl.: F16J 15/08

(54) **Metallische Zylinderkopfdichtung**
Metallic cylinder head gasket
Joint de culasse métallique

(30) Priorität: 29.09.2001 DE 10148295
(43) Veröffentlichungstag der Anmeldung: 02.04.2003
(73) Patentinhaber: ElringKlinger AG, 72581 Dettingen (DE)
(72) Erfinder: Diez, Armin, 73252 Lenningen (DE); Gruhler, Tobias, 72793 Pfullingen (DE); Fritz, Wolfgang, 72555 Metzingen (DE)
(74) Vertreter: HOEGER, STELLRECHT & PARTNER Patentanwälte

(56) Entgegenhaltungen:
- EP-A- 0 470 790
- DE-U- 29 804 534

## Beschreibung

Die Erfindung betrifft eine Zylinderkopfdichtung mit einer mindestens im wesentlichen metallischen Dichtungsplatte, welche mindestens eine von wenigstens einer elastisch höhenverformbaren Sicke umschlossene Brennraumöffnung und mindestens eine die Sickenverformung begrenzende, die Brennraumöffnung gleichfalls umschließende, der Sicke benachbarte Verformungsbegrenzungsvorrichtung (Stopper) aufweist.

Bei ein- oder mehrlagigen metallischen Zylinderkopfdichtungen war es bislang üblich, zur Erzeugung eines Stoppers radial innerhalb oder außerhalb (bezüglich der Brennraumöffnung) der eine Abdichtfunktion ausübenden Sicke die Dicke einer Metallblechlage in einem die Brennraumöffnung kreisringförmig umschließenden Bereich dadurch zu vergrößern, daß auf diese Metallblechlage ein flacher metallischer Ring aufgebracht wurde (beispielsweise durch Aufschweißen) oder daß ein die Brennraumöffnung umgebender Randbereich der Metallblechlage umgebördelt, d. h. um ca. 180° umgefaltet wurde. Ein derartiger Stopper hat zumindest nahezu keine elastischen Eigenschaften und in den meisten Fällen auch zumindest nahezu keine plastischen Eigenschaften, jedenfalls unter den im Motorbetrieb auf den Stopper ausgeübten Druckkräften.

Neuerdings sind ein- oder mehrlagige metallische Zylinderkopfdichtungen vorgeschlagen worden (WO 98/28559 und DE-U-298 04 534), bei denen der Stopper unter den im Motorbetrieb auf ihn einwirkenden Druckkräften in erheblichem Maße plastisch und/oder elastisch, vorzugsweise überwiegend elastisch verformbar ist und eine der folgenden Gestaltungen aufweist: Die mit dem Stopper versehene Metallblechlage ist (bezüglich der Brennraumöffnung) radial innerhalb der zu schützenden, die Abdichtfunktion übernehmenden Sicke mit einer oder mehreren, den Stopper bildenden Sicken versehen, welche die Brennraumöffnung ringförmig umschließen und konzentrisch zu dieser verlaufen, wobei im Falle mehrerer Sicken diese abwechselnd in die eine oder andere Richtung der Achse der Brennraumöffnung vorspringen können (siehe Figuren 12A und 12B der WO 98/28559); alternativ wird der Stopper von einer Serie von in radialer Richtung abwechselnd aufeinanderfolgenden Rippen und Rillen gebildet, welche die Brennraumöffnung ringförmig umschließen und an beiden Seiten der Metallblechlage vorgesehen sind, wobei die Rippen über die beiden Hauptoberflächen der Metallblechlage vorstehen und so im Bereich des Stoppers zu einer Verdickung der Metallblechlage führen, jeder Rippe der einen Seite der Metallblechlage eine Rippe auf der anderen Seite der Metallblechlage unmittelbar gegenüberliegt (gleiches gilt dann für die Rillen) und die Rippen sowie Rillen durch Fließpressen der Metallblechlage erzeugt wurden (Fig. 12E der WO 98/28559 sowie DE-U-298 04 534). Diese Stopper lassen sich zwar einfacher herstellen als auf eine Metallblechlage aufgebrachte oder durch Umbördeln einer Metallblechlage erzeugte Stopper, da sich eine mit Sicken versehene Metallblechlage gegebenenfalls in einem einzigen Werkzeug ausstanzen und mit den Sicken versehen läßt, und weil gegebenenfalls mit einem einzigen Werkzeug eine Metallblechlage ausgestanzt und mit den vorstehend beschriebenen Rippen und Rillen versehen werden kann; andererseits haben die neuerdings vorgeschlagenen Stopper einen gravierenden Nachteil: Die wesentliche Aufgabe eines Stoppers ist es, die die Abdichtfunktion zumindest hauptsächlich übernehmende Sicke im Motorbetrieb vor übermäßigen Verformungen zu schützen, eine Aufgabe, welche ein im Motorbetrieb nicht unerheblich elastisch und/oder plastisch verformbarer Stopper nur höchst unzureichend erfüllen kann. Wird der Stopper von einer die Brennraumöffnung kreisringförmig umschließenden Sicke oder von mehrere solchen konzentrisch zueinander angeordneten Sicken gebildet, kann die zwischen Motorblock und Zylinderkopf eingespannte Zylinderkopfdichtung der Abflachung der Sicken auch keinen erheblichen Widerstand entgegensetzen (sieht man einmal von der Steifigkeit der Sicken ab), da bei diesen bekannten Zylinderkopfdichtungen eine mit der Abflachung der den Stopper bildenden Sicken einhergehende Verschiebung (in bezüglich der Brennraumöffnung radialer Richtung) des die Brennraumöffnung umgebenden Bereichs der Metallblechlage nicht zu verhindern ist. Diese Nachteile gelten auch für den sich aus der DE-C-199 34 825 ergebenden Stopper aus einem Kranz von an jeweils 3 Seiten freigestanzten Lappen, welche abwechselnd nach oben und unten aus einer Metallblechlage herausgebogen sind.

Der Erfindung lag die Aufgabe zugrunde, eine mindestens im wesentlichen metallische Zylinderkopfdichtung zu schaffen, bei der man bei der Herstellung der Verformungsbegrenzungsvorrichtung (Stopper) gleichfalls ohne das Aufbringen eines Metallrings oder das Umbördeln einer Metallblechlage auskommt, bei der jedoch die Verformungsbegrenzungsvorrichtung ihren hauptsächlichen Zweck, nämlich eine übermäßige Verformung bzw. Abflachung einer die Abdichtung hauptsächlich bewirkenden Sicke im Motorbetrieb zu verhindern, besser erfüllen kann als die vorstehend beschriebenen bekannten Verformungsbegrenzungsvorrichtungen aus einer oder mehreren die Brennraumöffnung konzentrisch umschließenden Sicken bzw. Rippen und Rillen.

Ausgehend von einer Zylinderkopfdichtung mit einer solchen Verformungsbegrenzungsvorrichtung, d. h. einer Zylinderkopfdichtung der eingangs erwähnten Art, bei der die Verformungsbegrenzungsvorrichtung in einer Metallblechlage der Dichtungsplatte durch eine solche Verformung der Metallblechlage ausgebildet ist, daß die letztere in ihren Hauptoberflächen im Bereich der Verformungsbegrenzungsvorrichtung Erhebungen und Vertiefungen aufweist und die Dicke der Verformungsbegrenzungsvorrichtung größer ist als die originäre Dicke des unverformten Blechs der Metallblechlage, also z. B. die Dicke der Metallblechlage in einem an die Verformungsbegrenzungsvorrichtung unmittelbar angrenzenden Bereich der Metallblechlage, läßt sich diese Aufgabe mittels einer mit der Verformungsbegrenzungsvorrichtung versehenen Metallblechlage lösen, die erfindungsgemäß derart gestaltet ist, daß in Schnitten durch die Metallblechlage längs mit der Brennraumöffnung koaxialer Kreiszylinderflächen die Verformungsbegrenzungsvorrichtung jeweils eine Reihe von diskreten, in Umfangsrichtung der Brennraumöffnung aufeinanderfolgenden, in der Schnittfläche über das Blech der Metallblechlage miteinander verbundenen Erhebungen sowie diesen in der Metallblechlage direkt gegenüberliegende korrespondierende Vertiefungen aufweist, wobei in einer Draufsicht auf die Metallblechlage die Form der Erhebungen von der Form von die Brennraumöffnung mindestens teilweise umschließenden Kreisbögen abweicht sowie die von den Erhebungen insgesamt eingenommene Fläche zumindest gleich der Hälfte der Gesamtfläche der Verformungsbegrenzungsvorrichtung und vorzugsweise deutlich größer ist als 50 % dieser Gesamtfläche. Unter der von einer Erhebung (in der Draufsicht auf die Metallblechlage) eingenommenen Fläche ist dabei die gesamte Fläche aller derjenigen Bereiche der Metallblechlage zu verstehen, welche bei der Erzeugung der Erhebung durch Verformen der Metallblechlage verformt wurden, d. h. aus der vor der Verformung durch die Metallblechlage definierten Ebene herausragen.

Die erfindungsgemäße Verformungsbegrenzungsvorrichtung unterscheidet sich auch von einer Abwandlung der aus der WO 98/28559 bekannten Verformungsbegrenzungsvorrichtung aus kreisbogenförmigen Sicken, welche nicht exakt konzentrisch zur Brennraumöffnung verlaufen, so daß eine oder mehrere der Brennraumöffnung unmittelbar benachbarten Sicken keine vollständigen Kreise bilden - auch bei einer solchen Abwandlung bilden die Erhebungen in einer Draufsicht auf die Metallblechlage die Brennraumöffnung mindestens teilweise umschließende Kreisbögen.

Bei einer erfindungsgemäßen Zylinderkopfdichtung kann die besagte Metallblechlage an ihrer einen Hauptoberfläche nur mit Erhebungen und an ihrer anderen Hauptoberfläche nur mit Vertiefungen versehen sein, es sind aber auch Ausführungsformen möglich, bei denen an jeder der beiden Hauptoberflächen der Metallblechlage sowohl Erhebungen, als auch Vertiefungen vorgesehen sind, wobei die Vertiefungen an der einen Hauptoberfläche Erhebungen an der anderen Hauptoberfläche direkt gegenüberliegen; in jedem Fall korrespondiert jede Vertiefung in ihrer Form mit der ihr gegenüberliegenden Erhebung. Ferner soll unter einer vorgegebenen spezifischen Druckbelastung der Dichtung (Druckkraft pro Flächeneinheit der Dichtungsplatte) in dem von dem Stopper und der durch diesen zu schützenden Sicke eingenommenen Ringbereich der Dichtungsplatte die elastische und/oder plastische Höhenverformbarkeit der Erhebungen des Stoppers kleiner und vorzugsweise kleiner als ca. 50 % der Höhenverformbarkeit der durch den Stopper zu schützenden Sicke sein. Betrachtet man die Verformungsbegrenzungsvorrichtung (Stopper) und die durch letztere zu schützende Sicke jeweils als eine senkrecht zur Ebene der Metallblechlage verformbare Feder, so soll die Federkonstante (d. h. die Härte) der Verformungsbegrenzungsvorrichtung also größer sein als diejenige der zu schützenden Sicke.

Wenn vorstehend von der Dicke der Verformungsbegrenzungsvorrichtung die Rede ist, so wird diese Dicke vom Abstand der beiden zueinander parallelen Ebenen definiert, die sich im Bereich der Verformungsbegrenzungsvorrichtung beiderseits der Metallblechlage gegen die beiden Seiten der Verformungsbegrenzungsvorrichtung anlegen lassen. Natürlich sind die vorstehend erwähnten diskreten (oder vereinzelten) Erhebungen über Bereiche der Metallblechlage miteinander verbunden, wobei die Basis oder der Grund einer Erhebung unmittelbar in die Basis bzw. den Grund einer benachbarten Erhebung übergehen kann. Hinsichtlich des von den Erhebungen eingenommenen Flächenanteils der Verformungsbegrenzungsvorrichtung sind natürlich die Flächenanteile sämtlicher Erhebungen zu addieren, auch wenn sie von beiden Seiten der Metallblechlage abstehen (die letzere ist also sozusagen als transparent zu betrachten, wenn es um die Ermittlung des von den Erhebungen eingenommenen Flächenanteils geht).

Bei der erfindungsgemäßen Zylinderkopfdichtung sollte das Material der Metallblechlage im Bereich der Erhebungen durch Verformung bis nahezu zur Bruchgrenze verfestigt sein; anders ausgedrückt sollten die Erhebungen unter den im Motorbetrieb auf die Erhebungen einwirkenden Druckkräften zumindest nahezu unelastisch sein und zumindest nahezu keine plastischen Eigenschaften aufweisen.

Anders als bei den Verformungsbegrenzungsvorrichtungen gemäß der WO 98/28559 und dem DE-U-298 04 534 zeichnet sich eine erfindungsgemäße Zylinderkopfdichtung dadurch aus, daß in Schnitten durch die besagte Metallblechlage längs mit der Brennraumöffnung koaxialen Kreiszylinderflächen die bei eingebauter Dichtung gegen eine benachbarte Dichtfläche anzupressenden Kuppen der Erhebungen mit dieser Dichtfläche eine die Brennraumöffnung umschließende, in Umfangsrichtung der letzteren jedoch mehrfach und insbesondere regelmäßig unterbrochene Kontaktzone bilden, wobei unter der genannten Dichtfläche eine Hauptoberfläche einer anderen Metallblechlage der Zylinderkopfdichtung oder eine Dichtfläche von Zylinderkopf oder Motorblock zu verstehen ist, gegen welche die Zylinderkopfdichtung anliegt.

Die erfindungsgemäße Verformungsbegrenzungsvorrichtung muß die Brennraumöffnung nicht unbedingt als in sich geschlossenes ringförmiges Gebilde umgeben; so kann bei sehr nahe beieinanderliegenden Brennräumen der in der Metallblechlage zwischen zwei Brennraumöffnungen liegende Steg zu schmal sein, um die Verformungsbegrenzungsvorrichtung auch im Bereich dieses Stegs auszubilden.

Um eine besonders hohe Verformungssteifigkeit der Verformungsbegrenzungsvorrichtung zu erzielen, sind bei bevorzugten Ausführungsformen der erfindungsgemäßen Zylinderkopfdichtung die Erhebungen im Schnitt ungefähr rechteck- oder trapezförmig und in einer Draufsicht auf die Metallblechlage einander vorzugsweise zumindest nahezu abstandslos benachbart. Die Rechteck- oder Trapezform der Erhebungen wird vorzugsweise dadurch erreicht, daß die Erhebungen zunächst mit einer größeren als ihrer endgültigen Höhe erzeugt und dann durch Zurückverformen wieder etwas abgeflacht werden; dadurch ergibt sich eine höhere Steifigkeit der Erhebungen, weil der Anteil der kaltverformten Zonen sowie der Umformungsgrad der Metallblechlage im Bereich der Erhebungen erhöht werden.

Bei einer ersten Gruppe besonders vorteilhafter erfindungsgemäßer Zylinderkopfdichtungen bildet die Verformungsbegrenzungsvorrichtung in einer Draufsicht auf die besagte Metallblechlage ein zweidimensionales Muster von vereinzelten diskreten Erhebungen, wobei in einer Draufsicht auf die Metallblechlage die Abstände zwischen einander benachbarten Erhebungen wesentlich kleiner sind (insbesondere 50 % oder weniger) als die maximalen Durchmesser der Erhebungen. Bevorzugt bilden die Erhebungen mindestens in manchen Bereichen der Verformungsbegrenzungsvorrichtung ein regelmäßiges Muster, die Geometrie des Motorblocks bzw. Zylinderkopfs kann aber auch ein überall ungleichmäßiges Muster erforderlich machen. Damit bei der Erzeugung der Erhebungen und Vertiefungen mit einem möglichst einfach herzustellenden Werkzeug gearbeitet werden kann, empfiehlt es sich, alle Erhebungen (und damit auch alle Vertiefungen) ungefähr gleich zu gestalten, und zwar vorzugsweise noppenförmig. Eine besonders dichte "Packung" der Erhebungen und damit eine besonders verformungssteife Verformungsbegrenzungsvorrichtung ergibt sich dann, wenn in einer Draufsicht auf die besagte Metallblechlage die Erhebungen ein Wabenmuster (honey comb) bilden. Im Sinne einer möglichst dichten Packung ist es auch empfehlenswert, alle Erhebungen auf einer Seite der Metallblechlage vorzusehen.

Bei mehrlagigen metallischen Zylinderkopfdichtungen ist es an sich bekannt, in eine oder mehrere Metallagen ein Muster von noppenförmigen Erhebungen einzuprägen (EP-A-0 470 790, Fig. 7); zum einen dienen diese Erhebungen jedoch ausschließlich dem Zweck, den Wärmeübergang zwischen Motorblock und Zylinderkopf dadurch zu minimieren, daß auch in der eingebauten Zylinderkopfdichtung deren Metallagen in Abständen voneinander gehalten werden, und zum anderen sind die Abstände zwischen einander benachbarten Erhebungen größer als die maximalen Durchmesser der Erhebungen, so daß ein solches Noppenmuster nicht die für eine Verformungsbegrenzungsvorrichtung wünschenswerte Verformungssteifigkeit besitzt.

Bei einer zweiten Gruppe von erfindungsgemäßen Zylinderkopfdichtungen ist die mit der Verformungsbegrenzungsvorrichtung versehene Metallblechlage so gestaltet, daß die Erhebungen von mindestens einer Sicke gebildet werden, welche in einer Draufsicht auf die Metallblechlage die Brennraumöffnung mindestens nahezu geschlossen umgibt und über wenigstens einen Teil ihrer Länge einen sich in Umfangsrichtung der Brennraumöffnung erstreckenden Mäander bildet. Eine solche Ausführungsform ermöglicht die Bildung einer zweiten Abdichtstelle, vorzugsweise radial (bezüglich der Brennraumöffnung) innerhalb der die Abdichtfunktion hauptsächlich ausübenden Sicke, da eine solche Verformungsbegrenzungsvorrichtung mit einer benachbarten Dichtfläche eine geschlossene Kontaktzone um die Brennraumöffnung herum bilden kann, wenn die die Verformungsbegrenzungsvorrichtung bildende Sicke die Brennraumöffnung geschlossen umgibt. An Stellen, an denen im abzudichtenden Motor in unmittelbarer Nachbarschaft eines Brennraums eine Öffnung liegt, beispielsweise einen Brennraum oder eine Öffnung zur Durchleitung von Kühlwasser oder Schmieröl, kann die die Verformungsbegrenzungsvorrichtung bildende Sicke in dem Bereich zwischen dem Brennraum und der besagten Öffnung keinen mäanderförmigen Verlauf aufweisen, sondern beispielsweise einen geradlinigen oder kreisbogenförmigen Verlauf. Durch eine entsprechende dichte "Packung" der Mäanderschlingen läßt sich eine Verformungsbegrenzungsvorrichtung erreichen, welche viel verformungssteifer ist als die vorstehend beschriebenen Verformungsbegrenzungsvorrichtung nach der WO 98/28559 und dem DE-U-298 04 534, und zwar auch dann, wenn der - in einer Draufsicht auf die Metallblechlage gemessene - von der Mäandersicke eingenommene Flächenanteil der Verformungsbegrenzungsvorrichtung kleiner ist als die Hälfte der in dieser Draufsicht gemessenen Gesamtfläche der Verformungsbegrenzungsvorrichtung. Es sind also auch derartige Mäandersicken als unter die Erfindung fallend zu betrachten.

Bei einer dritten Gruppe erfindungsgemäßer Zylinderkopfdichtungen ist die Verformungsbegrenzungsvorrichtung so gestaltet, daß in einer Draufsicht auf die besagte Metallblechlage die Erhebungen von einem die Brennraumöffnung umschließenden Kranz von sich bezüglich der Brennraumöffnung ungefähr in radialer Richtung erstreckenden Sicken gebildet werden. Bei einem solchen Sickenverlauf ginge mit einer Sickenabflachung zumindest keine nennenswerte radiale Verschiebung des gesickten Bereichs der Metallblechlage einher (im Gegensatz zu einer Verformungsbegrenzungsvorrichtung mit einer oder mehreren Sicken, deren jede die Brennraumöffnung ringförmig umschließt).

Bei bevorzugten Ausführungsformen der Erfindung wird das Material der Metallblechlage bei der Herstellung der Erhebungen und Vertiefungen soweit wie möglich, nämlich nahezu bis zur Bruchgrenze, umgeformt und dabei kaltverfestigt. Für die mit dem Stopper versehene Metallblechlage eignen sich Stähle mit einer Zugfestigkeit von ca. 600 bis ca. 1800 N/mm², vorzugsweise von 700 bis 1700 N/mm² - darunter wäre das Material zu weich, eine höhere Zugfestigkeit würde die Verformungsmöglichkeiten beeinträchtigen. Angemerkt sei, daß nicht unbedingt die Zugfestigkeit des Ausgangsmaterials in diesem Bereich liegen muß, sondern vielmehr die Zugfestigkeit des fertigen Erzeugnisses. Gegebenenfalls kann die gewünschte Härte durch eine Wärmebehandlung nach dem Verformen erzielt werden, bevorzugt wird aber das Erreichen der gewünschten Härte durch Kaltverfestigung. Als besonders geeignet erwiesen sich Bandstahlsorten 1.4310 nach der europäischen Norm EN 10088-2.

Bevorzugt wird der Stopper an einer sogenannten Funktionslage erzeugt, d. h. an einer Federstahllage, in der auch die die Abdichtfunktion hauptsächlich übernehmende Sicke erzeugt wird bzw. wurde. Bei mehrlagigen metallischen Zylinderkopfdichtungen kann der Stopper aber auch an einer anderen Lage vorgesehen werden, so wie sich dies aus dem Stand der Technik über Zylinderkopfdichtungen ergibt. Bei einer mehrlagigen metallischen Zylinderkopfdichtung empfiehlt es sich, den Stopper nicht an einer der Außenlagen vorzusehen, sondern an einer im Inneren des Lagenpakets liegenden Metallblechlage, damit nicht die Gefahr besteht, daß sich die Erhebungen in die Dichtfläche des Motorblocks bzw. des Zylinderkopfs eindrücken, vor allem dann, wenn der Zylinderkopf, wie dies bei modernen Motoren üblich ist, aus einer Leichtmetallegierung besteht. Deshalb empfehlen sich auch Erhebungen mit ebenen Kuppen.

Anzustreben ist ein möglichst dichtes Raster oder Muster von Erhebungen (soweit dies die Umformung der Metallblechlage zuläßt), um so den Anteil der tragenden Gesamtfläche des Stoppers möglichst groß zu gestalten. In diesem Sinne kann es auch empfehlenswert sein, die Lücken zwischen den Kuppen der Erhebungen sowie gegebenenfalls die mit den Erhebungen korrespondierenden Vertiefungen mit einem Füllstoff auszufüllen, insbesondere mit einem mit Füllstoffen versehenen Gießharz oder elastomeren Material.

Vorzugsweise liegt die Höhe der Erhebungen in einem Bereich von 5 bis 25 Hundertstel mm, insbesondere von 5 bis 15 Hundertstel mm; wenn die Erhebungen in einer dem Zylinderkopf zugewandten Außenfläche der Zylinderkopfdichtung vorgesehen sind und der Zylinderkopf aus einer Leichtmetalllegierung besteht, kann es sich allerdings empfehlen, die Erhebungen bis zu 30 Hundertstel mm hoch zu machen, um eine eventuelle Eingrabung der Erhebungen in die Dichtfläche des Zylinderkopfs zu berücksichtigen.

Für die mit dem Stopper versehene Metallblechlage eignen sich besonders Bleche mit einer Dicke von 0,10 bis 0,50 mm, vorzugsweise von 0,20 bis 0,30 mm.

Da es besonders empfehlenswert ist, die Erhebungen und Vertiefungen durch Tiefziehen des Blechs zu erzeugen, weisen bei bevorzugten Ausführungsformen die Erhebungen schräg zur Ebene der Metallblechlage verlaufende Flanken auf, so daß sich ungefähr trapezförmige Querschnitte ergeben.

Wie bereits erwähnt, ist anzustreben, daß die Erhebungen eine möglichst große "Packungsdichte" aufweisen; infolgedessen wird empfohlen, die Erhebungen in einer Draufsicht auf die Metallblechlage möglichst klein zu gestalten (so klein wie dies das gewählte Umformungsverfahren zuläßt).

Im Hinblick auf das angestrebte Ziel einer möglichst großen "Packungsdichte" und die materialbedingte Grenze für eine Umformung des Blechs sind Ausführungsformen zu bevorzugen, bei denen die Erhebungen alle in dieselbe Richtung weisen, d. h. von derselben Hauptoberfläche der Metallblechlage abstehen; möglich sind aber natürlich auch Ausführungsformen, bei denen die Erhebungen insbesondere abwechselnd in beide Richtungen weisen.

Wie bereits erwähnt, befinden sich bei modernen Motoren Durchgangsöffnungen für Kühlwasser, Öl und dergleichen häufig in unmittelbarer Nähe eines Brennraums, so daß in einer Zylinderkopfdichtung um eine Brennraumöffnung herum bereichsweise wenig Platz für die Unterbringung einer abdichtenden Sicke und eines Stoppers verbleibt. Gleiches gilt für nahe beeinanderliegende Brennraumöffnungen. Dies kann bei den vorstehend geschilderten bekannten Zylinderkopfdichtungen, bei denen der Stopper nicht nur von einer, sondern von mehreren konzentrischen Sicken gebildet wird, zu erheblichen Schwierigkeiten führen. Diesbezüglich bietet die Erfindung einen weiteren Vorteil, wenn der Stopper von einem Muster kleiner noppenförmiger Erhebungen gebildet wird, da es dann ohne weiteres möglich ist, in einem solchen schmalen Bereich der Zylinderkopfdichtung einen eingeschnürten Bereich des Noppenmusters vorzusehen. Auch kann das von dem Noppenmuster gebildete, ringförmige Band in seiner Breite auch zu dem Zweck veränderlich gestaltet, d. h. breitenprofiliert werden, den Schwankungen der spezifischen Flächenpressung der Dichtung um einen Brennraum herum Rechnung zu tragen. Entsprechendes gilt aber auch für Ausführungsformen mit Mäandersicken oder einem Kranz von ungefähr radial verlaufenden Sicken.

Im Vergleich zu bekannten Stoppern aus einer oder mehreren Sicken, welche die Brennraumöffnung ringförmig umschließen, bietet die Erfindung noch einen weiteren Vorteil, und zwar insbesondere dann, wenn der Stopper von einem Muster noppenartiger Erhebungen gebildet wird: Eine Sicke stützt sich an benachbarten Flächen einerseits nur über ihren linienförmigen Kamm und andererseits nur über ihre beiden linienförmigen Sickenfüße ab, während bei einem erfindungsgemäßen Stopper das Muster der Abstützflächen sehr viel dichter ist, so daß schon aus diesem Grund ein erfindungsgemäßer Stopper einen sehr viel größeren Rückformwiderstand aufbringen kann als ein Stopper aus einer oder mehreren, die Brennraumöffnung ringförmig umschließenden Sicken.

Bei erfindungsgemäßen Zylinderkopfdichtungen bildet der Stopper in einer Draufsicht auf die Metallblechlage einen Bereich in Form eines die Brennraumöffnung mindestens nahezu ringförmig umschließenden Bandes, dessen Breite vorzugsweise zwischen 0,8 und 5 mm, insbesondere zwischen 1 und 3,5 mm liegt. In dieser Draufsicht wird dieses Band (bezüglich der Brennraumöffnung radial außen und innen) durch jeweils einen Linienzug begrenzt, gebildet von einer möglichst gestreckten Kurve oder Linie, welche die radial außen bzw. innen liegenden Erhebungen bzw. Erhebungsbereiche des Stoppers tangiert und mathematisch als Einhüllende oder Hüllkurve oder Enveloppe der Erhebungen bezeichnet wird. Die in der Draufsicht gemessene Fläche des von den beiden Einhüllenden definierten Bandes ist als Gesamtfläche der Verformungsbegrenzungsvorrichtung anzusehen.

Bei besonders vorteilhaften Ausführungsformen der Erfindung liegt der Stopper zwischen der die Abdichtfunktion hauptsächlich übernehmenden Sicke und der Brennraumöffnung (grundsätzlich könnte der Stopper oder ein weiterer Stopper auch radial außerhalb der besagten Sicke liegen), vor allem deshalb, weil dann die die Abdichtfunktion hauptsächlich übernehmende Sicke vor den hohen, im Brennraum herrschenden Temperaturen besser geschützt ist.

Bei einer im Sinne einer Abflachung wirkenden Druckbeanspruchung des vorstehend erörterten, sich aus der WO 98/28559 ergebenden Stoppers überwiegen die bezüglich der Brennraumöffnung radialen Verschiebungen der Metallblechlage deren Verschiebungen in Umfangsrichtung der Brennraumöffnung, während die Verhältnisse bei einem erfindungsgemäßen Stopper gerade umgekehrt sind.

Da beim Prägen oder Tiefziehen der den erfindungsgemäßen Stopper bildenden Erhebungen radiale Verschiebungen der Metallblechlage jedoch nicht völlig ausgeschlossen werden können, empfiehlt es sich, die endgültige Kontur der Brennraumöffnung erst nach der Herstellung des Stoppers aus der Metallblechlage auszustanzen. Hierbei kann es ohne weiteres vorkommen, daß Teile des zunächst hergestellten Stoppers an- oder weggestanzt werden, so daß ein aus noppenförmigen Erhebungen bestehender Stopper z. B. angestanzte derartige noppenförmige Erhebungen aufweisen kann und bei einem von einer Mäandersicke gebildeten Stopper die radial innenliegenden Schlingen (in der Draufsicht U-förmigen Bereiche der mäanderförmigen Sicke) ganz oder zu einem Teil fehlen.

Es ist bekannt, einen Stopper mit einer um eine Brennraumöffnung herum variierenden Höhe und/oder Breite zu versehen, um die spezifische Flächenpressung um eine Brennraumöffnung herum zu vergleichmäßigen; dieses Prinzip läßt sich selbstverständlich auch auf einen erfindungsgemäßen Stopper anwenden, so daß beispielsweise die Höhe seiner Erhebungen um die Brennraumöffnung herum variiert.

Weitere Merkmale, Vorteile und Einzelheiten der Erfindung ergeben sich aus der nachfolgenden Beschreibung sowie der beigefügten zeichnerischen Darstellung besonders vorteilhafter Ausführungsformen der erfindungsgemäßen Zylinderkopfdichtung sowie eines zu bevorzugenden Tiefziehwerkzeugs zur Herstellung eines erfindungsgemäßen Stoppers durch eine Art Tiefziehen - die Erfindung betrifft also auch ein solches Werkzeug und ein Verfahren zur Herstellung einer bevorzugten Ausführungsform des erfindungsgemäßen Stoppers. In der Zeichnung zeigen:
- Fig. 1: eine Draufsicht auf eine erfindungsgemäße Zylinderkopfdichtung, bei der es sich um eine Dichtung für einen Einzylindermotor oder um eine sogenannte Einzeldichtung für einen Mehrzylindermotor handeln kann - bei solchen Mehrzylindermotoren mit Einzeldichtungen ist für jeden Brennraum eine separate Zylinderkopfdichtung vorgesehen, so daß mehrere nebeneinander liegende Einzeldichtungen zwischen Motorblock und Zylinderkopf eingespannt sind;
- Fig. 2: einen Ausschnitt aus Fig. 1, welcher einen Bereich des in Fig. 1 dargestellten Stoppers in größerem Maßstab zeigt;
- Fig. 3: einen Schnitt nach der Linie 3-3 in Fig. 1 samt einer Draufsicht auf zwei der in Fig. 3 dargestellten Erhebungen sowie einer Draufsicht auf zwei der in Fig. 3 erkennbaren Vertiefungen;
- Fig. 4A: eine schematische Draufsicht auf einen Ausschnitt eines Oberteils eines erfindungsgemäßen Tiefziehwerkzeugs zur Herstellung der in den Figuren 1 bis 3 gezeigten Erhebungen und
- Fig. 4B: eine Draufsicht auf einen entsprechenden Ausschnitt eines Unterteils dieses Tiefziehwerkzeugs;
- Figuren 5 und 6: Draufsichten auf einen Bereich erfindungsgemäßer Zylinderkopfdichtungen für einen Mehrzylindermotor mit Stoppern ähnlich demjenigen gemäß den Figuren 1 bis 3;
- Figuren 7 bis 16: der Fig. 3 entsprechende Schnittdarstellungen durch 10 weitere Ausführungsformen der erfindungsgemäßen Zylinderkopfdichtung;
- Figuren 17 und 18: zwei weitere Ausführungsformen einer erfindungsgemäßen Verformungsbegrenzungsvorrichtung, und
- Fig. 19: eine der Fig. 5 entsprechende Darstellung einer Variante der Ausführungsform gemäß Fig. 17.

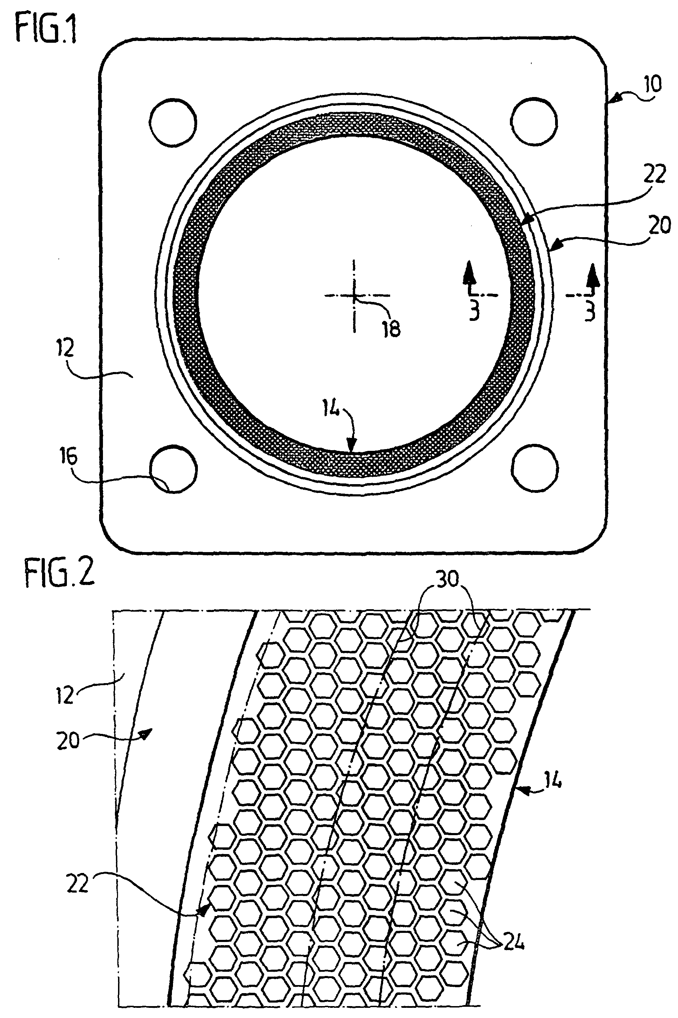

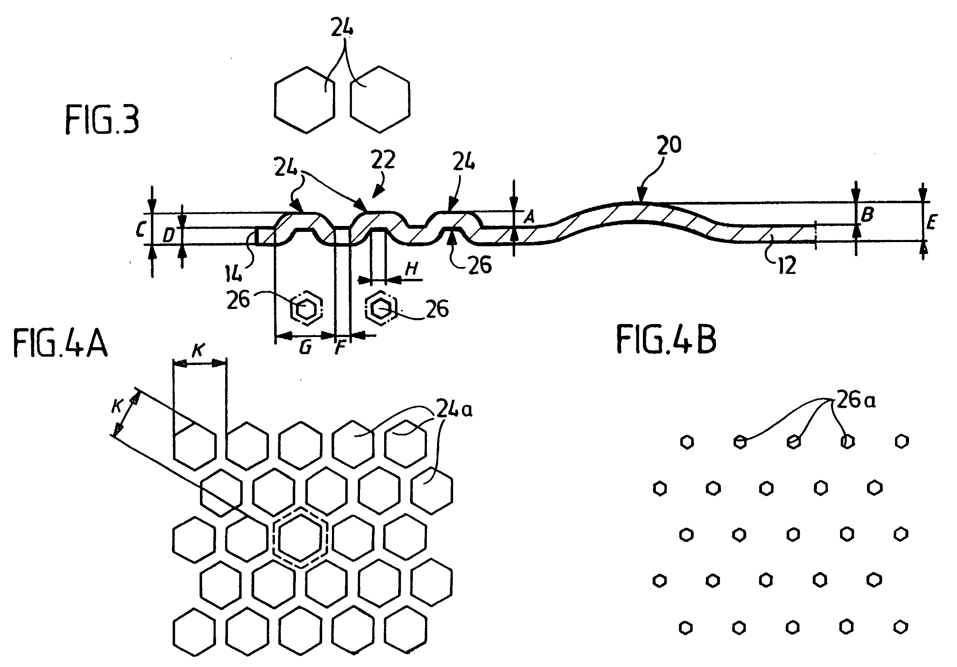

Die in Fig. 1 dargestellte Zylinderkopfdichtung hat eine Dichtungsplatte 10, welche aus einer einzigen Metallblechlage 12 (siehe auch Fig. 3) besteht und aus der eine zumindest im wesentlichen kreisrunde Brennraumöffnung 14 sowie Schraubenöffnungen 16 für den Durchtritt von Zylinderkopfschrauben ausgestanzt wurden. Das Zentrum bzw. die Achse der Brennraumöffnung 14 wurde mit 18 bezeichnet. Die Abdichtung der Brennraumöffnung 14 bzw. des zugehörigen Brennraums gegen den Austritt von Brenngasen erfolgt mindestens im wesentlichen durch eine Sicke 20, bei der es sich im dargestellten Fall um eine sogenannte Vollsicke handelt, welche die Brennraumöffnung 14 als geschlossener, zur Brennraumachse 18 konzentrischer Kreisring umgibt und bei eingebauter Dichtung im Motorbetrieb im Sinne einer Abflachung senkrecht zur Dichtungsplatte 10 federelastisch verformbar sein muß, weshalb die Metallblechlage 12 aus Federstahlblech besteht.

Damit die Sicke 20 unter dem Einfluß der von den Zylinderkopfschrauben erzeugten Druckkräfte sowie der im Motorbetrieb auftretenden, periodisch schwankenden Drücke nicht übermäßig abgeflacht werden kann (es bestünde sonst die Gefahr, daß im Motorbetrieb im Bereich der Sicke 20 Risse in der Metallblechlage 12 entstehen und die Sicke die erforderlichen federelastischen Eigenschaften verliert), wurde die Metallblechlage 12 mit einer Verformungsbegrenzungsvorrichtung versehen, welche im folgenden wie üblich als Stopper bezeichnet wird und als Ganzes mit 22 gekennzeichnet wurde. In der Draufsicht auf die Dichtungsplatte 10 bzw. die Metallblechlage 12 hat der Stopper 22 die Gestalt eines ringförmigen Bandes, welches die Brennraumöffnung 14 umschließt und vorzugsweise zwischen der Sicke 20 und dem Rand der Brennraumöffnung 14 angeordnet ist; bei der dargestellten bevorzugten Ausführungsform grenzt der Stopper 22 fast unmittelbar an den Rand der Brennraumöffnung 14 an.

Bei der in den Figuren 1 bis 3 dargestellten Ausführungsform besteht der Stopper 22 aus einem regelmäßigen Muster oder Raster von noppenförmigen Erhebungen 24, welche alle zumindest ungefähr dieselbe Gestalt haben und von derselben Seite bzw. Hauptoberfläche der Metallblechlage 12 abstehen; jeder der Erhebungen 24 liegt eine Vertiefung 26 direkt gegenüber, deren Gestalt mit der Gestalt der zugehörigen Erhebung 24 korrespondiert. Wie die Fig. 2 erkennen läßt, bilden die Erhebungen 24 ein sogenanntes Wabenmuster, welches die größte "Packungsdichte" der Erhebungen 24 gewährleistet, d. h. die größtmögliche Anzahl von Erhebungen je Flächeneinheit der Metallblechlage 12.

Wie sich aus Fig. 3 ergibt, stehen die Erhebungen 24 über dieselbe Hauptoberfläche der Metallblechlage 12 vor wie die Sicke 20, so daß die gemäß Fig. 3 untere Seite der Metallblechlage insgesamt eben ist, jedenfalls in dem in Fig. 3 dargestellten Bereich der Metallblechlage, sieht man von den Vertiefungen 26 und der konkaven Seite der Sicke 20 ab. In diesem Fall ist die Höhe A der Erhebungen 24 kleiner als die Höhe B der Sicke 20, so daß die Sickenhöhe zwar federelastisch verringert werden kann, sich die Sicke jedoch nicht übermäßig abflachen läßt, wenn der in Richtung senkrecht zur Dichtungsplatte 10 gemessene Verformungswiderstand der Erhebungen 24 hinreichend groß ist. Wesentlich ist, daß die Gesamtdicke C des Stoppers 22 größer ist als die Dicke D der Metallblechlage 12 in einem an den Stopper 22 unmittelbar angrenzenden Bereich der Metallblechlage, jedoch kleiner als die Gesamtdicke E der verformten Metallblechlage im Bereich der Sicke 20.

Erfindungsgemäß ist in der Schnittebene der Fig. 3 in einer Draufsicht auf die Metallblechlage 12 der maximale Durchmesser G einer jeden Erhebung 24 größer, und zwar vorzugsweise erheblich größer als der Abstand F zwischen zwei einander benachbarten Erhebungen 24; anzustreben ist, daß dieser Abstand F so klein wie möglich ist, nämlich so klein, wie es die Verformungseigenschaften des Materials der Metallblechlage 12 gerade noch zulassen. Bei einem Federstahlblech mit einer Blechstärke von 0,2 mm beträgt der maximale Durchmesser G beispielsweise 0,7 mm und der Abstand F beispielsweise 0,2 mm - in diesem Fall beträgt der kleinste Durchmesser H einer jeden Vertiefung 26 0,2 mm (gemessen in der Schnittebene der Fig. 3 und gesehen in einer Ansicht der Metallblechlage 12 gemäß Fig. 3 von unten).

Wie besonders deutlich die Fig. 2 zeigt, bilden die Erhebungen 24 ein regelmäßiges Wabenmuster, welches zur größtmöglichen "Packungsdichte" der Erhebungen führt; die Vertiefungen 26 bilden dann ein entsprechendes Wabenmuster (in einer Ansicht der Metallblechlage 12 gemäß Fig. 3 von unten).

In Schnitten durch die Metallblechlage 12 längs mit der Brennraumachse 18 koaxialen Kreiszylinderflächen 30, welche in Fig. 2 strichpunktiert angedeutet wurden, bildet der Stopper 22 jeweils eine Reihe von vereinzelten diskreten, in Umfangsrichtung der Brennraumöffnung 14 aufeinanderfolgenden Erhebungen 24 bzw. eine solche Reihe von diskreten Vertiefungen 26, wobei in einer Draufsicht auf die Metallblechlage der Abstand zwischen einander benachbarten Erhebungen kleiner ist als der maximale Durchmesser dieser Erhebungen; dieses wesentliche Merkmal der Erfindung ergibt sich besonders deutlich aus Fig. 2.

In Abwandlung der in den Figuren 1 und 2 dargestellten Ausführungsform kann das von den Erhebungen 24 gebildete Muster auch so orientiert sein, daß sich Reihen von in Umfangsrichtung der Brennraumöffnung 14 aufeinanderfolgenden Erhebungen 24 ergeben, wobei diese Reihen zur Brennraumachse 18 konzentrische Kreisringe bilden. In diesem Fall ist in Schnitten durch die Metallblechlage 12 längs mit der Brennraumöffnung 14 koaxialen Kreiszylinderflächen 30 der Abstand zwischen in Umfangsrichtung der Brennraumöffnung aufeinanderfolgenden Erhebungen kleiner als der in dieser Richtung gemessene maximale Durchmesser der Erhebungen.

Wie eine Betrachtung der Fig. 2 erkennen läßt, kann die Erfindung bei Ausführungsformen mit noppenartigen Erhebungen bezüglich der Abstände der Erhebungen voneinander auch so definiert werden, daß in einer Draufsicht auf die Metallblechlage der Abstand zwischen einander benachbarten Erhebungen kleiner ist als der minimale Durchmesser der Erhebungen an ihrem Grund, von dem aus die betreffende Erhebung von der Metallblechlage absteht.

In den Figuren 4A und 4B wurde das für die Herstellung des Stoppers 22 verwendete Werkzeug schematisch dargestellt, wobei es sich bei diesem Werkzeug um eine Art Tiefziehwerkzeug mit einem Werkzeugoberteil und einem Werkzeugunterteil handelt, zwischen die die Metallblechlage 12 eingelegt wird, worauf die beiden Werkzeugteile gegeneinandergepreßt werden. Die Fig. 4A zeigt einen Ausschnitt aus einer Draufsicht auf die dem Werkzeugunterteil zugewandte Seite des Werkzeugoberteils, die Fig. 4B einen Ausschnitt aus einer Draufsicht auf die dem Werkzeugoberteil zugewandte Seite des Werkzeugunterteils. In die in Fig. 4A dargestellte Seite des Werkzeugoberteils wurden Vertiefungen (oder Öffnungen) 24a eingearbeitet, welche ein regelmäßiges Wabenmuster bilden, während an der in Fig. 4B dargestellten Seite des Werkzeugunterteils stiftartige Erhöhungen 26a vorgesehen sind, welche sich senkrecht zur Zeichnungsebene der Fig. 4B erstrecken und gleichfalls ein regelmäßiges Muster bilden, wobei die Achsen der Erhöhungen 26a mit den Achsen der Vertiefungen 24a zusammenfallen, wenn die beiden Werkzeugteile in Richtung dieser Achsen einander genähert werden, so daß die Erhöhungen 26a in die Vertiefungen 24a eindringen. Unter Berücksichtigung der vorstehend im Zusammenhang mit Fig. 3 angegebenen Maße betragen die in Fig. 4A eingetragenen Abstände K 0,9 mm. Alternativ läßt sich ein erfindungsgemäßer Stopper aber auch durch Verfahren herstellen, welche mit Prägewalzen arbeiten und beispielsweise unter den Bezeichnungen Rollieren und Rändeln bekannt sind.

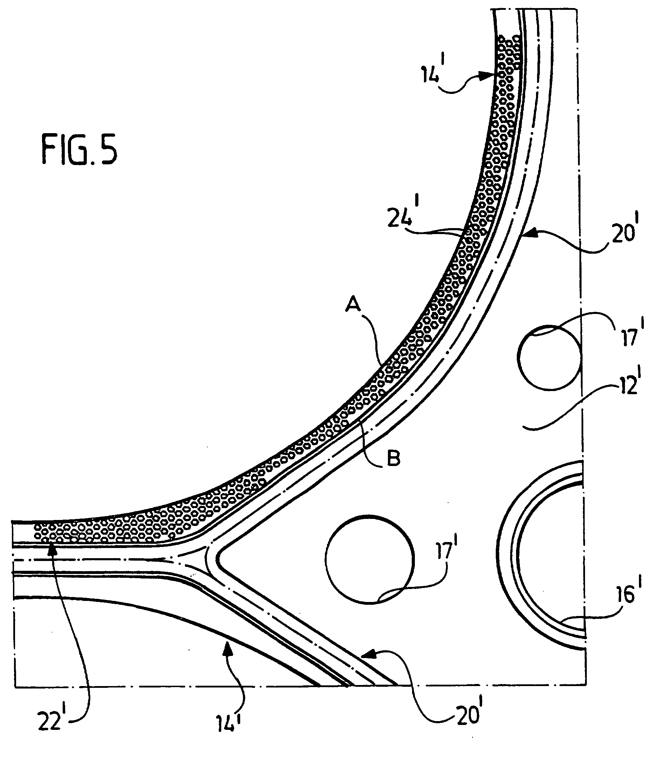

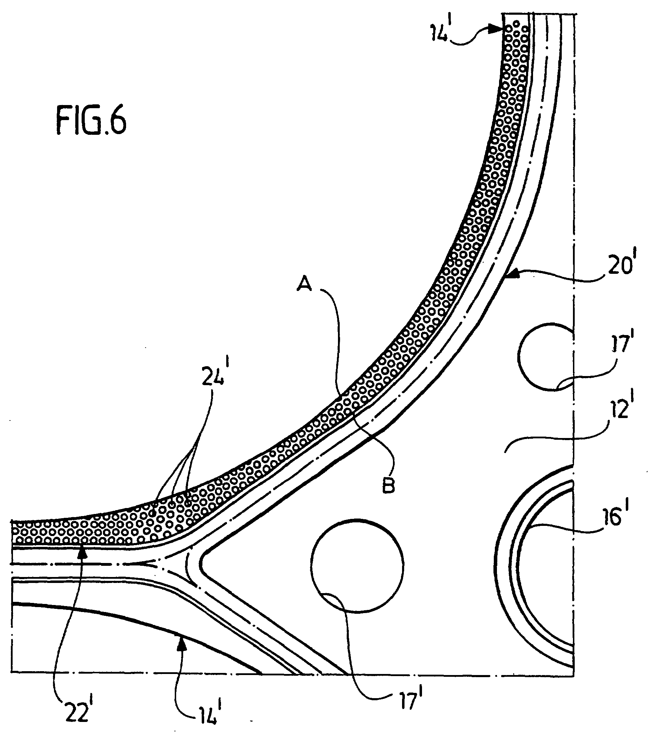

Die Figuren 5 und 6 zeigen Ausführungsformen, bei denen die Breite des Stoppers um eine Brennraumöffnung herum variiert, wobei in beiden Figuren nur jeweils ein Bereich eines einzigen Stoppers detailliert dargestellt wurde. In beiden Fällen sind in einer Metallblechlage 12' mehrere Brennraumöffnungen 14', Schraubenöffnungen 16' und Wasserdurchgangsöffnungen 17' ausgebildet, und in beiden Fällen werden die erfindungsgemäßen Stopper 22' von einem Muster noppenförmiger Erhebungen 24' gebildet. Da die endgültigen Konturen der Brennraumöffnungen 14' ausgestanzt wurden, nachdem die noppenförmigen Erhebungen 24' durch Verformen des Blechs der Metallblechlage 12' erzeugt wurden, umfassen die Stopper 22' auch teilweise weggestanzte und deshalb unvollständige Erhebungen 24'. Bei der Ausführungsform nach Fig. 5 bilden die noppenförmigen Erhebungen 24' ein regelmäßiges Muster, was, wie die Fig. 5 erkennen läßt, innerhalb des Stoppers 22' zu Lücken in dem Noppenmuster führt; hingegen bilden bei der Ausführungsform gemäß Fig. 6 die noppenförmigen Erhebungen 24' bereichsweise ein derart unregelmäßiges Muster, daß sich auf diese Weise innerhalb des Stoppers 22' Lücken im Noppenmuster vermeiden lassen.

In den Figuren 5 und 6 wurden die Einhüllenden des Stoppers mit A und B bezeichnet.

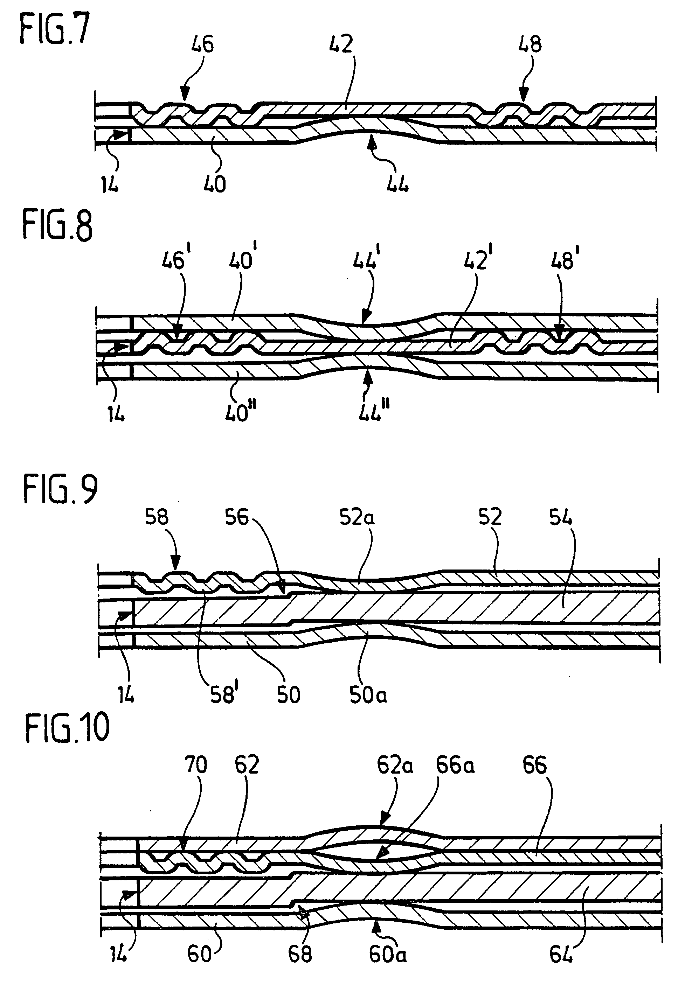

Im folgenden werden weitere bevorzugte Ausführungsformen der erfindungsgemäßen Zylinderkopfdichtung erörtert, und zwar anhand von der Fig. 3 entsprechenden Schnittdarstellungen, um zu verdeutlichen, daß sich die Erfindung auch auf mehrlagige Zylinderkopfdichtungen anwenden läßt und der Stopper nicht unbedingt an derjenigen Metallblechlage vorgesehen sein muß, welche diejenige Sicke bzw. Sicken aufweist, durch die um einen Brennraum herum hauptsächlich abgedichtet wird. In allen Figuren 7 bis 16 wurde dabei die Brennraumöffnung, welche sich durch alle Lagen der betreffenden Zylinderkopfdichtung hindurcherstreckt, wieder mit 14 bezeichnet.

Die Fig. 7 zeigt eine zweilagige Zylinderkopfdichtung mit zwei aufeinanderliegenden Metallblechlagen 40 und 42; bei der Metallblechlage 40 handelt es sich um eine sogenannte Funktionslage aus Federstahlblech, in der in radialem Abstand von der Brennraumöffnung 14 eine die Abdichtfunktion im wesentlichen übernehmende Sicke 44 ausgebildet ist, während die Metallblechlage 42 eine Stahlblechlage sein soll, welche unter Einsatzbedingungen zumindest im Bereich zweier Stopper 46 und 48 keine nennenswerten elastischen oder plastischen Eigenschaften aufweist. Die Stopper 46 und 48 entsprechen dem Stopper 22 der Ausführungsform nach den Figuren 1 bis 3, so daß es diesbezüglich keiner weiteren Erläuterungen bedarf. Die Sicke 44 springt in Richtung auf die Metallblechlage 42 vor, die Erhebungen der Stopper 46 und 48 in Richtung der Metallblechlage 40. Bei dieser Ausführungsform wird die Sicke 44 im Motorbetrieb radial innerhalb und außerhalb (bezogen auf die Brennraumöffnung 14) abgestützt und so vor unzulässig hohen Verformungen geschützt.

Die in Fig. 8 dargestellte Zylinderkopfdichtung ist dreilagig mit zwei gesickten Außenlagen 40' und 40" sowie einer mit Stoppern 46' und 48' versehenen Zwischenlage 42', welche der Metallblechlage 42 der Ausführungsform nach Fig. 5 entspricht, während die Außenlagen 40' und 40" der Metallblechlage 40 der Ausführungsform nach Fig. 7 entsprechen und jeweils mit einer Sicke 44' bzw. 44" versehen sind. Die Erhebungen der Stopper 46' und 48' stehen zwar alle nur in einer Richtung über die eine Hauptoberfläche der Zwischenlage 42' vor, sie sind jedoch in der Lage, unerwünscht hohe Verformungen beider Sicken 44' und 44" zu verhindern, wenn die Gesamtdicke des Stoppers 46' bzw. 48' hinreichend groß ist, da sich die Zwischenlage 42' radial innerhalb und radial außerhalb der Kämme der Sicken 44' und 44" gemäß Fig. 8 nach unten ausbiegen läßt.

Die Fig. 9 zeigt eine weitere dreilagige Zylinderkopfdichtung mit zwei als Funktionslagen dienenden Außenlagen 50 und 52 sowie einer Zwischenlage 54, welche bei 56 um die Brennraumöffnung 14 herum abgekröpft ist, und zwar in Richtung auf die Außenlage 50 und radial innerhalb einer in Richtung auf die Zwischenlage 54 vorspringenden Sicke 50a der Außenlage 50. Infolgedessen kann der radial innerhalb der Abkröpfung 56 liegende Ringbereich der Zwischenlage 54 als Stopper für die Sicke 50a fungieren. Die Außenlage 52 hat gleichfalls eine Sicke 52a, welche in Richtung auf die Zwischenlage 54 vorspringt und der Sicke 50a gegenüberliegt; außerdem weist die Außenlage 52 radial innerhalb der Sicke 52a einen erfindungsgemäßen Stopper 58 auf, welcher bis auf einen Unterschied dem Stopper 22 der Ausführungsform nach den Figuren 1 bis 3 entspricht - wegen der Abkröpfung 56 müssen die Erhebungen 58' des Stoppers 58 um so viel höher als die Erhebungen 24 der Ausführungsform nach den Figuren 1 bis 3 sein, als dies der Höhe der Abkröpfung 56 entspricht, damit die Sicke 52a durch den Stopper 58 in derselben Weise vor übermäßigen Verformungen geschützt ist wie die Sicke 20 der Ausführungsform nach den Figuren 1 bis 3 durch die Erhebungen 24 des Stoppers 22.

Die Fig. 10 zeigt eine vierlagige Dichtung mit zwei Außenlagen 60 und 62 sowie zwei Innen- oder Zwischenlagen 64 und 66, wobei alle Lagen bis auf die Zwischenlage 64 mit einer die Brennraumöffnung 14 umschließenden Sicke 60a bzw. 62a bzw. 66a versehen sind. Radial innerhalb der Sicke 60a ist die Zwischenlage 64 bei 68 abgekröpft, und zwar in Richtung auf die Außenlage 60, so daß die Abkröpfung 68 eine Stopperfunktion für die Sicke 60a übernehmen kann. Radial innerhalb der Sicke 66a ist die Zwischenlage 66 mit einem erfindungsgemäßen Stopper 70 versehen, für den das über den Stopper 58 Gesagte gilt, da die Sicke 66a radial außerhalb der Abkröpfung 68 gegen die Zwischenlage 64 angepreßt wird, der Stopper 70 jedoch radial innerhalb der Abkröpfung 68 liegt. Bei entsprechender Bemessung der Gesamthöhe des Stoppers 70 kann dieser auch eine Stopperfunktion für die Sicke 62a der Außenlage 62 übernehmen - dies setzt voraus, daß bei im Motorbetrieb auftretender maximaler Pressung der Zylinderkopfdichtung, wenn der radial innere Bereich der Außenlage 60 gegen den radial inneren Bereich der Zwischenlage 64 anliegt, die Gesamtdicke der Dichtungsplatte im Bereich des Stoppers 70 so groß ist, daß die Sicke 62a nicht übermäßig abgeflacht werden kann.

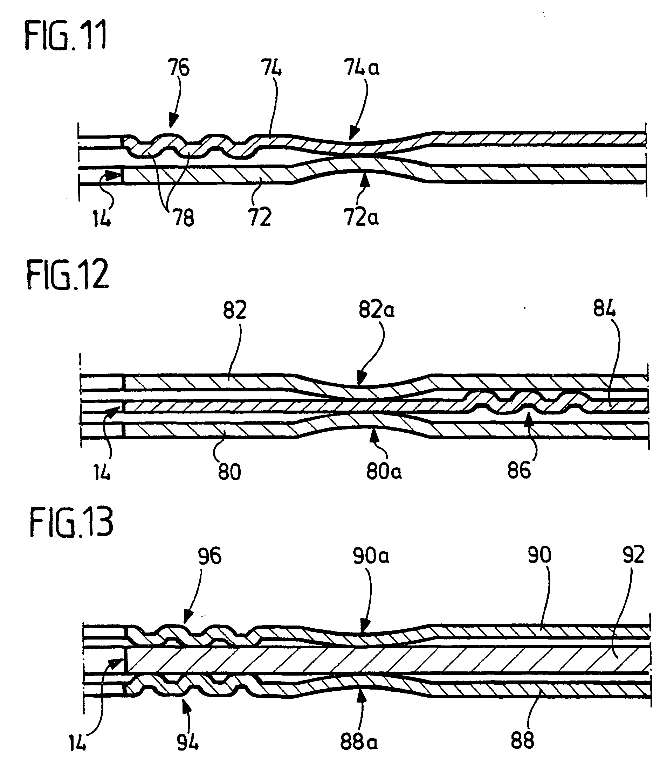

Die Fig. 11 zeigt eine Zylinderkopfdichtung, welche wie die Ausführungsform gemäß Fig. 7 zweilagig ist, wobei jedoch beide Metallblechlagen 72 und 74 der Ausführungsform nach Fig. 11 jeweils mit einer Sicke 72a bzw. 74a versehen sind und ein an der Metallblechlage 74 vorgesehener erfindungsgemäßer Stopper 76 so ausgebildet sein soll, daß er beide Sicken vor einer übermäßigen Abflachung schützen kann, was nur eine entsprechende Höhe der Erhebungen 78 des Stoppers 76 erfordert.

Durch die in Fig. 12 dargestellte Ausführungsform soll verdeutlicht werden, daß ein erfindungsgemäßer Stopper auch radial außerhalb der zu schützenden Sicke bzw. Sicken angeordnet werden kann. Diese Zylinderkopfdichtung hat zwei mit Sicken 80a und 82a versehene Außenlagen 80 und 82 sowie eine Zwischenlage 84 mit einem erfindungsgemäßen Stopper 86 zum Schutz der beiden gegen die Zwischenlage 84 vorspringenden Sicken. Bei dieser Ausführungsform kann es zweckmäßig sein, den Stopper 86, anders als zeichnerisch dargestellt, so zu gestalten, daß er nach beiden Seiten vorspringende Erhebungen aufweist, wobei in einer Draufsicht auf die Zwischenlage 84 einander benachbarte Erhebungen in entgegengesetzte Richtungen vorspringen.

Die in Fig. 13 dargestellte Zylinderkopfdichtung hat zwei als Funktions- und Stopperlagen dienende Außenlagen 88 und 90 sowie eine glatte Zwischenlage 92, gegen welche Sicken 88a und 90a der beiden Außenlagen vorspringen. Jede der Außenlagen hat radial innerhalb ihrer Sicke einen erfindungsgemäßen Stopper 94 bzw. 96, dessen Erhebungen in der gleichen Richtung vorspringen wie die Sicke der betreffenden Außenlage.

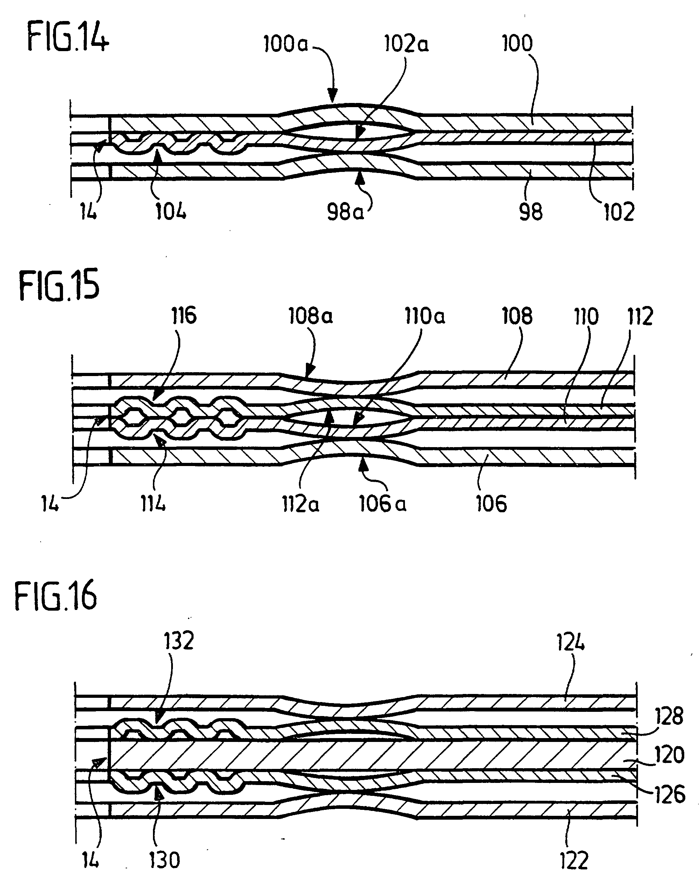

Die Fig. 14 zeigt eine dreilagige Zylinderkopfdichtung mit drei Funktionslagen, nämlich mit zwei Außenlagen 98 und 100 und einer Zwischenlage 102, deren jede mit einer Sicke 98a bzw. 100a bzw. 102a versehen ist. Die Zwischenlage 102 weist außerdem radial innerhalb der Sicken einen erfindungsgemäßen Stopper 104 auf, welcher bei entsprechender Bemessung seiner Gesamtdicke und einer hinreichenden Flexibilität der Lage 102 alle drei Sicken vor einer unerwünscht starken Abflachung schützen kann.

Die in Fig. 15 dargestellte Zylinderkopfdichtung hat vier Lagen, von denen zwei als Funktionslagen und zwei als Funktions- und Stopperlagen ausgebildet sind, nämlich zwei Außenlagen 106 und 108 sowie zwei Zwischenlagen 110 und 112, deren jede mit einer Sicke 106a bzw. 108a bzw. 110a bzw. 112a versehen ist. Zusätzlich weist jede der Zwischenlagen radial innerhalb der Sicken einen erfindungsgemäßen Stopper 114 bzw. 116 auf. Springen die Erhebungen des Stoppers 114 genügend weit (gemäß Fig. 15 nach unten) vor, können sie die beiden Sicken 106a und 110a vor übermäßigen Verformungen schützen, und entsprechendes gilt für den Stopper 116 und die Sicken 108a sowie 112a.

Die in Fig. 16 dargestellte Zylinderkopfdichtung ist fünflagig und bezüglich einer Zwischenlage 120 spiegelsymmetrisch gestaltet. Bei der Zwischenlage 120 handelt es sich um eine glatte Metallblechlage, während zwei Außenlagen 122 und 124 gesickte Funktionslagen und zwei Zwischenlagen 126 und 128 gesickte Funktions- und Stopperlagen sind, deren erfindungsgemäße Stopper mit 130 und 132 bezeichnet wurden. Bei entsprechender Bemessung der Gesamtdicke des Stopper 130 bzw. 132 kann jeder dieser Stopper die Sicken seiner eigenen sowie der benachbarten Metallblechlage vor einer übermäßigen Abflachung schützen.

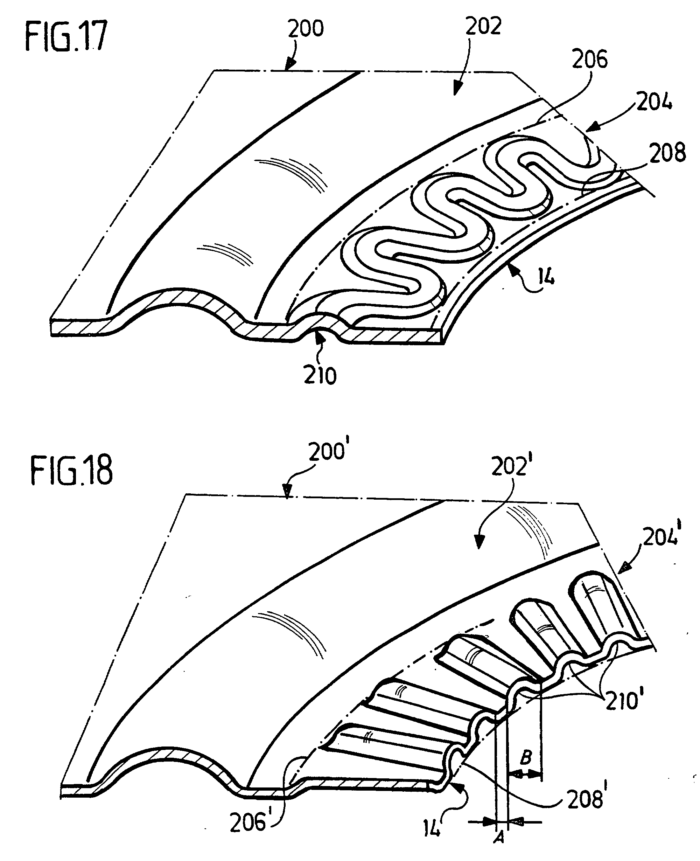

Die Figuren 17 und 18 zeigen zwei weitere Ausführungsformen der Erfindung, wobei jeweils ein Ausschnitt aus einer mit einem erfindungsgemäßen Stopper versehenen Metallblechlage perspektivisch dargestellt wurde; dabei weist die Metallblechlage auch eine die Abdichtfunktion im wesentlichen übernehmende Sicke auf, obwohl diese bei einer mehrlagigen Dichtung auch in einer anderen Metallblechlage vorgesehen sein könnte. In beiden Fällen wurde die Brennraumöffnung wieder mit 14 bezeichnet.

Bei der Ausführungsform gemäß Fig. 17 weist die Metallblechlage 200 radial innerhalb der die Abdichtfunktion im wesentlichen übernehmenden Sicke 202 einen Stopper 204 auf, welcher begrenzt wird durch strichpunktiert angedeutete Linien 206 und 208, d. h. die Einhüllenden, welche in diesem Fall beide konzentrisch zur Brennraumöffnung 14 verlaufen. Im Bereich des Stoppers 204 ist die Metallblechlage 200 mit einer mäanderförmig verlaufenden Sicke 210 versehen, deren Schlingen bezüglich der Brennraumöffnung 14 radial ausgerichtet sind und vorzugsweise so nahe beieinander liegen, als dies das Umformverhalten des Materials der Metallblechlage 200 zuläßt. Die Fig. 17 läßt erkennen, daß auch bei dieser Ausführungsform - in einer Draufsicht auf die Metallblechlage 200 und innerhalb der Begrenzungslinien 206, 208 - die von der Sicke 210 eingenommene Fläche zumindest gleich groß, vorzugsweise größer ist als die Hälfte der Fläche des von den Begrenzungslinien 206 und 208 eingegrenzten, ringförmigen Bereichs der Metallblechlage 200; in diesem Zusammenhang sei darauf hingewiesen, daß bei der Berechnung des Flächenanteils der Sicke 210, d. h. der Erhebungen dieses Stoppers 204, in einer Draufsicht auf die Metallblechlage 200 alle Bereiche der Sicke 210 einbezogen werden müssen, d. h. auch die Flächen der beiden Sickenflanken zwischen der Sickenkuppe und den unverformten Bereichen der Metallblechlage 200.

Bei der Ausführungsform nach Fig. 18 weist eine mit einer Sicke 202' versehene Metallblechlage 200' einen Stopper 204' auf, welcher von einem Kranz von sich bezüglich der Brennraumöffnung 14 radial erstreckenden Sicken 210' gebildet wird. Wie die Fig. 18 erkennen läßt, ist erfindungsgemäß der Mindestabstand A zwischen zwei einander benachbarten Sicken 210' kleiner, und zwar vorzugsweise wesentlich kleiner als die in der Draufsicht auf die Metallblechlage 200' gemessene Mindestbreite B der Sicken. In diesem Zusammenhang ist zu bemerken, daß sich der Abstand der Sicken voneinander in bezüglich der Brennraumöffnung 14 radialer Richtung nach außen vergrößern kann; alternativ oder zusätzlich kann sich die Sickenbreite in radialer Richtung nach außen vergrößern. An ihren radial äußeren Enden gehen die Sicken 210' mit Rundungen, d. h. mit Radien, in einen ebenen Bereich der Metallblechlage 200' über, und zwar sowohl in einer Seitenansicht einer jeden Sicke, als auch in einer Draufsicht auf die Metallblechlage (letzteres läßt die Fig. 18 nicht deutlich erkennen), so daß in einer Draufsicht auf die Metallblechlage die radial äußeren Enden der Sicken 210' ungefähr einen Kreisbogen bilden, welcher sich über 180° erstreckt. Die Einhüllenden des Stoppers 204' wurden mit 206' und 208' bezeichnet. Wird bei der Ausführungsform gemäß Fig. 18 die endgültige Kontur der Brennraumöffnung 14 erst nach der Erzeugung der Sicken 210' ausgestanzt, sollte dafür Sorge getragen werden, daß dabei die radial inneren Enden der Sicken nicht all zu sehr verformt werden, z. B. durch eine hinreichende Abstützung der Sicken im Stanzwerkzeug. Hingegen könnte es beim Ausstanzen der endgültigen Kontur der Brennraumöffnung 14 der Ausführungsform gemäß Fig. 17 toleriert werden, wenn die radial inneren Bögen oder Schlingen des von der Sicke 210 gebildeten Mäanders ganz oder teilweise weggestanzt würden.

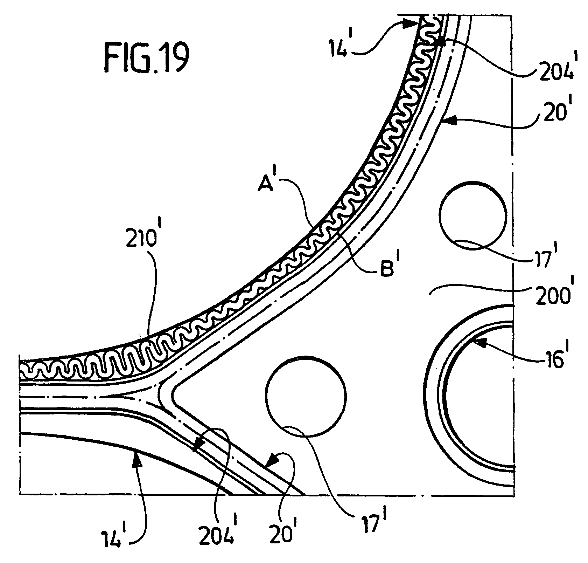

Die Fig. 19 zeigt eine Variante der Ausführungsform gemäß Fig. 17, und zwar eine Variante ähnlich der Ausführungsform gemäß Fig. 5 oder Fig. 6. Die Einhüllenden wurden dementsprechend mit A' und B' bezeichnet.

Die Fig. 19 zeigt eine Metallblechlage 200' mit Brennraumöffnungen 14', Schraubenöffnungen 16', Wasserdurchgangsöffnungen 17' und Sicken 20', welche die Brennraumöffnungen 14' umschließen, in einem Stegbereich zwischen zwei einander benachbarten Brennraumöffnungen 14' ineinander übergehen und durch erfindungsgemäße Stopper 204' vor übermäßigen Verformungen geschützt werden sollen. Der mehr im Detail dargestellte Stopper 204' wird von einer Sicke 210' mit mäanderförmigem Verlauf gebildet, welche die zugehörige Brennraumöffnung 14' geschlossen umgibt und in ihrem mäanderförmigen Verlauf derart variiert, daß der Stopper 204' um die Brennraumöffnung 14' herum eine variierende Breite aufweist. Die Gründe für diese Breitenprofilierung können in folgendem gesehen werden: Wenn in der Metallblechlage 200' in unmittelbarer Nachbarschaft einer Brennraumöffnung 14' Öffnungen, wie eine der Öffnungen 17', vorgesehen sind, können die beengten räumlichen Verhältnisse eine Einschnürung des Stoppers 204' erforderlich machen; andererseits kann es empfehlenswert sein, die Stopper 204' dort bereichsweise zu verbreitern, wo zwei Sicken 20' im Stegbereich zwischen zwei einander benachbarten Brennraumöffnungen 14' ineinander übergehen und eine Y-förmige Konfiguration bilden.

Wie sich aus dem Vorstehenden ergibt, weist jeder erfindungsgemäße Stopper in einer Draufsicht auf die Metallblechlage eine Vielzahl kleiner Radien auf, in deren Bereich das Material der Metallblechlage kaltverfestigt ist, d. h. der Flächenanteil der kaltverfestigten Bereiche ist bei einem erfindungsgemäßen Stopper sehr viel größer als bei einem Stopper gemäß der WO 98/28559. Dies drückt sich in der Summe der Bogenwinkel dieser Radien eines in einer Draufsicht gesehenen Stoppers aus; bei den vorstehend beschriebenen bekannten Stoppern, welche sich aus der WO 98/28559 und dem DE-U-298 04 534 ergeben, ist die Summe der Bogenwinkel 360° multipliziert mit der Anzahl der kreisförmigen Sicken, hingegen ergeben sich bei den erfindungsgemäßen Stoppern die folgenden Bogenwinkelsummen: Wird der Stopper von einem Muster noppenförmiger Erhebungen gebildet, beträgt die Bogenwinkelsumme 360° multipliziert mit der Anzahl der Noppen, hat der Stopper eine die Brennraumöffnung mindestens nahezu geschlossen umgebende Sicke, welche über wenigstens einen Teil ihrer Länge einen mäanderförmigen Verlauf aufweist, beträgt die Bogenwinkelsumme 2 mal 180° multipliziert mit der Schlingenzahl des Mäanders, und wird der Stopper von einem Kranz radial verlaufender Sicken gebildet, beträgt die Bogenwinkelsumme 180° multipliziert mit der Anzahl der Sicken.

## Patentansprüche

1. Zylinderkopfdichtung mit einer mindestens im wesentlichen metallischen Dichtungsplatte (10), welche mindestens eine von wenigstens einer elastisch höhenverformbaren Sicke (20) umschlossene Brennraumöffnung (14) und mindestens eine die Sickenverformung begrenzende, die Brennraumöffnung (14) umgebende und der Sicke (20) benachbarte Verformungsbegrenzungsvorrichtung (22) aufweist, die in einer Metallblechlage (12) der Dichtungsplatte (10) durch eine solche Verformung der Metallblechlage (12) ausgebildet ist, daß die letztere in ihren Hauptoberflächen im Bereich der Verformungsbegrenzungsvorrichtung (22) Erhebungen (24) und Vertiefungen (26) aufweist und die Gesamtdicke (C) der Metallblechlage (12) im Bereich der Verformungsbegrenzungsvorrichtung (22) größer ist als die originäre Dicke (D) der Metallblechlage (12), **dadurch gekennzeichnet, daß** in Schnitten durch die Metallblechlage (12) längs mit der Brennraumöffnung (14) koaxialer Kreiszylinderflächen (30) die Verformungsbegrenzungsvorrichtung (22) jeweils eine Reihe von diskreten, in Umfangsrichtung der Brennraumöffnung (14) aufeinanderfolgenden, in der Schnittfläche über das Blech der Metallblechlage (12) miteinander verbundenen Erhebungen (24) sowie diesen in der Metallblechlage (12) direkt gegenüberliegende korrespondierende Vertiefungen (26) aufweist, wobei in einer Draufsicht auf die Metallblechlage (12) im Bereich der Verformungsbegrenzungsvorrichtung (22) die von den Erhebungen (24) insgesamt eingenommene Fläche mindestens die Hälfte der Gesamtfläche der Verformungsbegrenzungsvorrichtung (22) beträgt, und die Form der Erhebungen (24) von der Form von die Brennraumöffnung (14) zumindest teilweise umschließenden Kreisbögen abweicht.

2. Zylinderkopfdichtung nach Anspruch 1, **dadurch gekennzeichnet, daß** in Schnitten durch die Metallblechlage (12) längs mit der Brennraumöffnung (14) koaxialen Kreiszylinderflächen (30) die bei eingebauter Dichtung gegen eine benachbarte Dichtfläche anzupressenden Kuppen der Erhebungen (24) mit dieser Dichtfläche eine die Brennraumöffnung (14) umschließende, in Umfangsrichtung der letzteren jedoch unterbrochene Kontaktzone bilden.

3. Zylinderkopfdichtung nach Anspruch 1 oder 2, **dadurch gekennzeichnet, daß** die Kuppen der Erhebungen (24) ungefähr parallel zur Ebene der Metallblechlage (12) verlaufen.

4. Zylinderkopfdichtung nach Anspruch 3, **dadurch gekennzeichnet, daß** in Schnitten durch die Metallblechlage (12) längs mit der Brennraumöffnung (14) koaxialen Kreiszylinderflächen (30) die Erhebungen (24) einen ungefähr U-förmigen Querschnitt haben.

5. Zylinderkopfdichtung nach einem oder mehreren der Ansprüche 1 bis 4, **dadurch gekennzeichnet, daß** die Erhebungen (24) unter den im Motorbetrieb auf die Erhebungen (24) ausgeübten Druckkräften zumindest nahezu unelastisch sind.

6. Zylinderkopfdichtung nach einem oder mehreren der Ansprüche 1 bis 5, **dadurch gekennzeichnet, daß** die Erhebungen (24) unter den im Motorbetrieb auf die Erhebungen (24) ausgeübten Druckkräften zumindest nahezu keine plastischen Eigenschaften aufweisen.

7. Zylinderkopfdichtung nach einem oder mehreren der Ansprüche 1 bis 6, **dadurch gekennzeichnet, daß** das Material der Metallblechlage (12) im Bereich der Erhebungen (24) durch Verformung bis nahezu zur Bruchgrenze kaltverfestigt ist.

8. Zylinderkopfdichtung nach einem oder mehreren der Ansprüche 1 bis 7, **dadurch gekennzeichnet, daß** in einer Draufsicht auf die Metallblechlage (12) die Erhebungen (24) einander zumindest nahezu abstandslos benachbart sind.

9. Zylinderkopfdichtung nach einem oder mehreren der Ansprüche 1 bis 8, **dadurch gekennzeichnet, daß** rings um die Brennraumöffnung (14) herum die senkrecht zur Metallblechlage (12) gemessene Federkonstante der Verformungsbegrenzungsvorrichtung (22) überall größer als diejenige der benachbarten Sicke (20) ist.

10. Zylinderkopfdichtung nach einem oder mehreren der Ansprüche 1 bis 9, **dadurch gekennzeichnet, daß** rings um die Brennraumöffnung (14) herum die Gesamtdicke (C) der Metallblechlage (12) im Bereich der Verformungsbegrenzungsvorrichtung (22) überall kleiner ist als im Bereich der benachbarten Sicke (20).

11. Zylinderkopfdichtung nach einem oder mehreren der Ansprüche 1 bis 10, **dadurch gekennzeichnet, daß** für jede Brennraumöffnung (14) eine Verformungsbegrenzungsvorrichtung (22) vorgesehen ist.

12. Zylinderkopfdichtung nach einem oder mehreren der Ansprüche 1 bis 11, **dadurch gekennzeichnet, daß** die Verformungsbegrenzungsvorrichtung (22) radial innerhalb der benachbarten Sicke (20) angeordnet ist.

13. Zylinderkopfdichtung nach einem oder mehreren der Ansprüche 1 bis 12, **dadurch gekennzeichnet, daß** für jede Brennraumöffnung (14) nur eine einzige Verformungsbegrenzungsvorrichtung (22) vorgesehen ist.

14. Zylinderkopfdichtung nach einem oder mehreren der Ansprüche 1 bis 13, **dadurch gekennzeichnet, daß** die der Verformungsbegrenzungsvorrichtung (22) benachbarte Sicke (20) in der Draufsicht auf die Metallblechlage (12) kreisförmig ausgebildet ist.

15. Zylinderkopfdichtung nach einem oder mehreren der Ansprüche 1 bis 14, **dadurch gekennzeichnet, daß** in einer Draufsicht auf die Metallblechlage (12) die Verformungsbegrenzungsvorrichtung (22) ein zweidimensionales Muster von diskreten Erhebungen (24) bildet.

16. Zylinderkopfdichtung nach Anspruch 15, **dadurch gekennzeichnet, daß** die Erhebungen (24) ein regelmäßiges Muster bilden.

17. Zylinderkopfdichtung nach Anspruch 15 oder 16, **dadurch gekennzeichnet, daß** in einer Draufsicht auf die Metallblechlage (12) die Abstände F zwischen einander benachbarten Erhebungen (24) kleiner sind als die maximalen Durchmesser G der Erhebungen (24), so daß gilt O ≤ F < G.

18. Zylinderkopfdichtung nach einem oder mehreren der Ansprüche 15 bis 17, **dadurch gekennzeichnet, daß** in einer Draufsicht auf die Metallblechlage (12) alle Erhebungen (24) ungefähr gleich gestaltet sind.

19. Zylinderkopfdichtung nach einem oder mehreren der Ansprüche 15 bis 18, **dadurch gekennzeichnet, daß** die Erhebungen (24) noppenförmig gestaltet sind.

20. Zylinderkopfdichtung nach einem oder mehreren der Ansprüche 15 bis 19, **dadurch gekennzeichnet, daß** in einer Draufsicht auf die Metallblechlage (12) die Erhebungen (24) ein Wabenmuster bilden.

21. Zylinderkopfdichtung nach einem oder mehreren der Ansprüche 1 bis 14, **dadurch gekennzeichnet, daß** die Erhebungen von mindestens einer Sicke (210) gebildet werden, welche in einer Draufsicht auf die Metallblechlage (200) die Brennraumöffnung (14) mindestens nahezu geschlossen umgibt und über wenigstens einen Teil ihrer Länge einen sich in Umfangsrichtung der Brennraumöffnung (14) erstreckenden, zumindest nahezu vollständigen Mäander bildet.

22. Zylinderkopfdichtung nach Anspruch 21, **dadurch gekennzeichnet, daß** die Verformungsbegrenzungsvorrichtung (204) von einer einzigen Sicke (210) gebildet wird.

23. Zylinderkopfdichtung nach einem oder mehreren der Ansprüche 1 bis 14, **dadurch gekennzeichnet, daß** in einer Draufsicht auf die Metallblechlage (200') die Erhebungen von einem die Brennraumöffnung (14) umschließenden Kranz von sich bezüglich der Brennraumöffnung (14) ungefähr in radialer Richtung erstreckenden Sicken (210') gebildet werden.

24. Zylinderkopfdichtung mit einer mindestens im wesentlichen metallischen Dichtungsplatte, welche mehrere, jeweils von wenigstens einer ersten, elastisch höhenverformbaren Sicke (202) umschlossene Brennraumöffnungen (14) und für jede dieser Sicken (202) mindestens eine die Sickenverformung begrenzende, die zugehörige Brennraumöffnung (14) umgebende, der Sicke benachbarte Verformungsbegrenzungsvorrichtung aufweist, die in einer Metallblechlage (200) der Dichtungsplatte durch eine Verformung dieser Metallblechlage ausgebildet ist, wobei
(a) die Verformungsbegrenzungsvorrichtung (204) von mindestens einer zweiten Sicke (210) dieser Metallblechlage (200) gebildet wird, welche in einer Draufsicht auf diese Metallblechlage (200) die zugehörige Brennraumöffnung (14) mindestens nahezu geschlossen umgibt und über wenigstens einen Teil ihrer Länge einen sich in Umfangsrichtung der zugehörigen Brennraumöffnung (14) erstreckenden, zumindest nahezu vollständigen Mäander bildet;
(b) rings um die zugehörige Brennraumöffnung (14) herum überall die senkrecht zu dieser Metallblechlage (200) gemessene Federkonstante der zweiten Sicke (210) größer als diejenige der ersten Sicke (202) ist;
(c) rings um die zugehörige Brennraumöffnung (14) herum überall die Gesamtdicke dieser Metallblechlage (200) im Bereich der zweiten Sicke (210) kleiner ist als im Bereich der ersten Sicke (202);
(d) die zweite Sicke (210) zwischen der Brennraumöffnung (14) und der ersten Sicke (202) angeordnet ist, und
(e) in einer Draufsicht auf die Metallblechlage (200) im Bereich der Verformungsbegrenzungsvorrichtung (204) die von der zweiten Sicke (210) insgesamt eingenommene Fläche mindestens gleich der Hälfte der Gesamtfläche der Verformungsbegrenzungsvorrichtung (204) ist.

25. Verfahren zur Herstellung einer Zylinderkopfdichtung nach einem oder mehreren der vorstehenden Ansprüche, **dadurch gekennzeichnet, daß** die Erhebungen zunächst mit einer größeren als ihrer endgültigen Höhe erzeugt und sodann durch eine teilweise derartige Rückverformung der Metallblechlage (12) (200) auf ihre endgültige Höhe gebracht werden, daß ihr Querschnitt in mit der Brennraumöffnung (14) koaxialen Kreiszylinderflächen (30) annähernd rechteckig oder trapezförmig ist.

## Claims

1. Cylinder head gasket with an at least substantially metallic gasket plate (10) comprising at least one combustion chamber opening (14) surrounded by at least one bead (20) elastically deformable in height, and close to the bead (20) at least one deformation delimiting device (22) which delimits the bead deformation, surrounds the combustion chamber opening (14) and is formed in a sheet metal layer (12) of the gasket plate (10) by such a deformation of the sheet metal layer (12) that the sheet metal layer has elevations (24) and depressions (26) in its main surfaces in the area of the deformation delimiting device (22) and the total thickness (C) of the sheet metal layer (12) in the area of the deformation delimiting device (22) is larger than the original thickness (D) of the sheet metal layer (12), **characterized in that** in sections through the sheet metal layer (12) along circular cylindrical surfaces (30) coaxial with the combustion chamber opening (14), the deformation delimiting device (22) respectively comprises a row of discrete elevations (24) following one another in a circumferential direction of the combustion chamber opening (14) and joined to one another in the sectional surface by the sheet metal of the sheet metal layer (12), and corresponding depressions (26) located directly opposite these elevations in the sheet metal layer (12), and in a plan view of the sheet metal layer (12) in the area of the deformation delimiting device (22) the total area occupied by the elevations (24) is at least equal to half of the total area of the deformation delimiting device (22), and the shape of the elevations (24) differs from the shape of circular arcs at least partly surrounding the combustion chamber opening (14).

2. Cylinder head gasket in accordance with claim 1, **characterized in that** in sections through the sheet metal layer (12) along circular cylindrical surfaces (30) coaxial with the combustion chamber opening (14) the crests of the elevations (24) to be pressed against a neighbouring sealing surface when the gasket is installed form with this sealing surface a contact zone which encloses the combustion chamber opening (14) but is interrupted in a circumferential direction of the combustion chamber opening.

3. Cylinder head gasket in accordance with claim 1 or 2, **characterized in that** the crests of the elevations (24) extend approximately parallel to the plane of the sheet metal layer (12).

4. Cylinder head gasket in accordance with claim 3, **characterized in that** the elevations (24) have an approximately U-shaped cross section in sections through the sheet metal layer (12) along circular cylindrical surfaces (30) coaxial with the combustion chamber opening (14).

5. Cylinder head gasket in accordance with any one or several of claims 1 to 4, **characterized in that** the elevations (24) are at least almost inelastic under the pressure forces exerted on the elevations (24) during operation of the engine.

6. Cylinder head gasket in accordance with any one or several of claims 1 to 5, **characterized in that** the elevations (24) have at least almost no plastic properties under the pressure forces exerted on the elevations (24) during operation of the engine.

7. Cylinder head gasket in accordance with any one or several of claims 1 to 6, **characterized in that** the material of the sheet metal layer (12) in the area of the elevations (24) is cold-worked by deformation up to almost the breaking limit.

8. Cylinder head gasket in accordance with any one or several of claims 1 to 7, **characterized in that** the elevations (24) lie close to one another with at least almost no spacing between them in a plan view of the sheet metal layer (12).

9. Cylinder head gasket in accordance with any one or several of claims 1 to 8, **characterized in that** the spring rate of the deformation delimiting device (22), measured perpendicularly to the sheet metal layer (12), is greater than that of the neighbouring bead (20) all around the combustion chamber opening (14).

10. Cylinder head gasket in accordance with any one or several of claims 1 to 9, **characterized in that** the total thickness (C) of the sheet metal layer (12) in the area of the deformation delimiting device (22) is smaller than in the area of the neighbouring bead (20) all around the combustion chamber opening (14).

11. Cylinder head gasket in accordance with any one or several of claims 1 to 10, **characterized in that** a deformation delimiting device (22) is provided for each combustion chamber opening (14).

12. Cylinder head gasket in accordance with any one or several of claims 1 to 11, **characterized in that** the deformation delimiting device (22) is arranged radially within the neighbouring bead (20).

13. Cylinder head gasket in accordance with any one or several of claims 1 to 12, **characterized in that** only a single deformation delimiting device (22) is provided for each combustion chamber opening (14).

14. Cylinder head gasket in accordance with any one or several of claims 1 to 13, **characterized in that** the bead (20) lying close to the deformation delimiting device (22) is of circular design in a plan view of the sheet metal layer (12).

15. Cylinder head gasket in accordance with any one or several of claims 1 to 14, **characterized in that** the deformation delimiting device (22) forms a two-dimensional pattern of discrete elevations (24) in a plan view of the sheet metal layer (12).

16. Cylinder head gasket in accordance with claim 15, **characterized in that** the elevations (24) form a regular pattern.

17. Cylinder head gasket in accordance with claim 15 or 16, **characterized in that** in a plan view of the sheet metal layer (12) the spacings F between neighbouring elevations (24) are smaller than the maximum diameters G of the elevations (24) so that 0 ≤ F < G applies.

18. Cylinder head gasket in accordance with any one or several of claims 15 to 17, **characterized in that** all elevations (24) are of approximately the same design in a plan view of the sheet metal layer (12).

19. Cylinder head gasket in accordance with any one or several of claims 15 to 18, **characterized in that** the elevations (24) are of knob-like design.

20. Cylinder head gasket in accordance with any one or several of claims 15 to 19, **characterized in that** the elevations (24) form a honeycomb pattern in a plan view of the sheet metal layer (12).

21. Cylinder head gasket in accordance with any one or several of claims 1 to 14, **characterized in that** the elevations are formed by at least one bead (210) which in a plan view of the sheet metal layer (200) surrounds the combustion chamber opening (14) in at least almost closed configuration and forms over at least part of its length an at least almost complete meander extending in a circumferential direction of the combustion chamber opening (14).

22. Cylinder head gasket in accordance with claim 21, **characterized in that** the deformation delimiting device (204) is formed by a single bead (210).

23. Cylinder head gasket in accordance with any one or several of claims 1 to 14, **characterized in that** in a plan view of the sheet metal layer (200') the elevations are formed by a ring of beads (210') which encloses the combustion chamber opening (14), with the beads extending approximately in a radial direction with respect to the combustion chamber opening (14).

24. Cylinder head gasket with an at least substantially metallic gasket plate comprising several combustion chamber openings (14), each being surrounded by at least one first bead (202) elastically deformable in height, and for each of these beads (202) at least one deformation delimiting device close to the bead, delimiting the bead deformation, surrounding the associated combustion chamber opening (14) and being formed in a sheet metal layer (200) of the gasket plate by deformation of this sheet metal layer, wherein
(a) the deformation delimiting device (204) is formed by at least one second bead (210) of this sheet metal layer (200), and, in a plan view of this sheet metal layer (200), the second bead surrounds the associated combustion chamber opening (14) at least almost completely and forms over at least part of its length an at least almost complete meander extending in a circumferential direction of the associated combustion chamber opening (14);
(b) all around the associated combustion chamber opening (14) the spring rate of the second bead (210) is greater than that of the first bead (202) when measured perpendicularly to this sheet metal layer (200);
(c) all around the associated combustion chamber opening (14) the total thickness of this sheet metal layer (200) in the area of the second bead (210) is smaller than in the area of the first bead (202);
(d) the second bead (210) is disposed between the combustion chamber opening (14) and the first bead (202); and
(e) in a plan view of the sheet metal layer (200) in the area of the deformation delimiting device (204) the total area occupied by the second bead (210) is at least equal to half of the total area of the deformation delimiting device (204).

25. Process for the manufacture of a cylinder head gasket in accordance with any one or several of the preceding claims, **characterized in that** the elevations are first produced with a larger height than their final height and are then reduced to their final height by such a partial reverse deformation of the sheet metal layer (12, 200) that their cross section in circular cylindrical surfaces (30) coaxial with the combustion chamber opening (14) is approximately rectangular or trapezoidal.

## Revendications

1. Joint de culasse avec une plaque d'étanchéité au moins essentiellement métallique (10) qui présente au moins une ouverture de chambre de combustion (14) entourée par au moins une moulure (20) déformable élastiquement en hauteur et au moins un dispositif de limitation de déformation (22) limitant la déformation de la moulure, entourant la chambre de combustion (14) et voisin de la moulure (20), qui est formé dans une couche de tôle métallique (12) de la plaque d'étanchéité (10) par une déformation de la couche de tôle métallique (12) telle que cette dernière présente, dans ses surfaces principales dans la zone du dispositif de limitation de déformation (22), des élévations (24) et des creux (26), et l'épaisseur totale (C) de la couche de tôle métallique (12) est supérieure dans la zone du dispositif de limitation de déformation (22) à l'épaisseur d'origine (D) de la couche de tôle métallique (12), **caractérisé en ce que**, dans des vues en coupe longitudinale de la couche de tôle métallique (12) avec des surfaces cylindriques circulaires (30) coaxiales à l'ouverture de chambre de combustion (14), le dispositif de limitation de déformation (22) présente une série d'élévations (24) discrètes, se succédant dans la direction circonférentielle de l'ouverture de la chambre de combustion (14), reliées entre elles dans la surface de coupe par l'intermédiaire de la tôle de la couche de tôle métallique (12), ainsi que des creux (26) correspondant de manière directement opposée à celles-ci dans la couche de tôle métallique (12), dans lequel dans une vue de dessus de la couche de tôle métallique (12) dans la zone du dispositif de limitation de déformation (22) la surface occupée au total par les élévations (24) est égale à au moins la moitié de la surface totale du dispositif de limitation de déformation (22) et la forme des élévations (24) diffère de la forme des arcs de cercle entourant au moins partiellement l'ouverture de la chambre de combustion (14).

2. Joint de culasse selon la revendication 1, **caractérisé en ce que**, dans des vues en coupe longitudinale de la couche de tôle métallique (12) avec des surfaces cylindriques circulaires (30) coaxiales à l'ouverture de chambre de combustion (14), les sommets des élévations (24) à comprimer contre une surface d'étanchéité voisine lorsque le joint est mis en place forment, avec cette surface d'étanchéité, une zone de contact entourant l'ouverture de la chambre de combustion (14) mais interrompue dans la direction circonférentielle de cette dernière.

3. Joint de culasse selon la revendication 1 ou 2, **caractérisé en ce que** les sommets des élévations (24) s'étendent à peu près parallèlement au plan de la couche de tôle métallique (12).

4. Joint de culasse selon la revendication 3, **caractérisé en ce que**, dans des vues en coupe longitudinale de la couche de tôle métallique (12) avec des surfaces cylindriques circulaires (30) coaxiales à l'ouverture de la chambre de combustion (14), les élévations (24) ont une section à peu près en forme de U.

5. Joint de culasse selon une ou plusieurs des revendications 1 à 4, **caractérisé en ce que** les élévations (24) sont au moins pratiquement non élastiques sous l'action des efforts de compression exercés sur les élévations (24) lors du fonctionnement du moteur.

6. Joint de culasse selon une ou plusieurs des revendications 1 à 5, **caractérisé en ce que** les élévations (24) ne présentent pratiquement pas de caractéristiques plastiques sous l'action des efforts de compression exercés sur les élévations (24) lors du fonctionnement du moteur.

7. Joint de culasse selon une ou plusieurs des revendications 1 à 6, **caractérisé en ce que** la matière de la couche de tôle métallique (12) est écrouie dans la zone des élévations (24) par formage jusqu'à presque la limite de rupture.

8. Joint de culasse selon une ou plusieurs des revendications 1 à 7, **caractérisé en ce que**, dans une vue de dessus de la couche de tôle métallique (12), les élévations (24) sont voisines les unes des autres au moins pratiquement sans écart.

9. Joint de culasse selon une ou plusieurs des revendications 1 à 8, **caractérisé en ce que**, tout autour de l'ouverture de chambre de combustion (14), la constante de rappel du dispositif de limitation de déformation (22) mesurée perpendiculairement à la couche de tôle métallique (12) est partout supérieure à celle de la moulure voisine (20).

10. Joint de culasse selon une ou plusieurs des revendications 1 à 9, **caractérisé en ce que**, tout autour de l'ouverture de la chambre de combustion (14), l'épaisseur totale (C) de la couche de tôle métallique (12) dans la zone du dispositif de limitation de déformation (22) est partout plus réduite que dans la zone de la moulure voisine (20).

11. Joint de culasse selon une ou plusieurs des revendications 1 à 10, **caractérisé en ce qu'**il est prévu un dispositif de limitation de déformation (22) pour chaque ouverture de chambre de combustion (14).

12. Joint de culasse selon une ou plusieurs des revendications 1 à 11, **caractérisé en ce que** le dispositif de limitation de déformation (22) est disposé dans le sens radial à l'intérieur de la moulure voisine (20).

13. Joint de culasse selon une ou plusieurs des revendications 1 à 12, **caractérisé en ce qu'**il n'est prévu qu'un seul dispositif de limitation de déformation (22) pour chaque ouverture de chambre de combustion (14).

14. Joint de culasse selon une ou plusieurs des revendications 1 à 13, **caractérisé en ce que** la moulure (20) voisine du dispositif de limitation de déformation (22) est de forme circulaire dans la vue de dessus de la couche de tôle métallique (12).

15. Joint de culasse selon une ou plusieurs des revendications 1 à 14, **caractérisé en ce que**, dans une vue de dessus de la couche de tôle métallique (12), le dispositif de limitation de déformation (22) forme un motif en deux dimensions d'élévations discrètes (24).

16. Joint de culasse selon la revendication 15, **caractérisé en ce que** les élévations (24) forment un motif régulier.

17. Joint de culasse selon la revendication 15 ou 16, **caractérisé en ce que**, dans une vue de dessus de la couche de tôle métallique (12), les écarts F entre des élévations voisines (24) sont inférieurs aux diamètres maximaux G des élévations (24), de sorte que l'on a O ≤ F < G.

18. Joint de culasse selon une ou plusieurs des revendications 15 à 17, **caractérisé en ce que**, dans une vue de dessus de la couche de tôle métallique (12), toutes les élévations (24) ont une forme à peu près identique.

19. Joint de culasse selon une ou plusieurs des revendications 15 à 18, **caractérisé en ce que** les élévations (24) sont en forme de nopes.

20. Joint de culasse selon une ou plusieurs des revendications 15 à 19, **caractérisé en ce que**, dans une vue de dessus de la couche de tôle métallique (12), les élévations (24) forme un motif en nid d'abeilles.

21. Joint de culasse selon une ou plusieurs des revendications 1 à 14, **caractérisé en ce que** les élévations (24) sont formées par au moins une moulure (210) qui, dans une vue de dessus de la couche de tôle métallique (200), entoure l'ouverture de chambre de combustion (14) au moins de manière pratiquement fermée et forme, sur au moins une partie de sa longueur, un méandre au moins pratiquement complet s'étendant dans la direction circonférentielle de l'ouverture de chambre de combustion (14).

22. Joint de culasse selon la revendication 21, **caractérisé en ce que** le dispositif de limitation de déformation (204) est formé par une seule moulure (210).

23. Joint de culasse selon une ou plusieurs des revendications 1 à 14, **caractérisé en ce que**, dans une vue de dessus de la couche de tôle métallique (200'), les élévations (24) sont formées par une couronne entourant l'ouverture de chambre de combustion (14) et composée de moulures (210') qui s'étendent à peu près dans la direction radiale par rapport à l'ouverture de la chambre de combustion (14).

24. Joint de culasse avec une plaque d'étanchéité au moins essentiellement métallique qui présente plusieurs ouvertures de chambre de combustion (14) entourées chacune par au moins une première moulure (202) déformable élastiquement en hauteur et pour chacune de ces moulures (202) au moins un dispositif de limitation de déformation limitant la déformation de la moulure, entourant l'ouverture de chambre de combustion (14) associée, voisin de la moulure, réalisé dans une couche de tôle métallique (200) de la plaque d'étanchéité par une déformation de cette couche de tôle métallique, dans lequel
(a) le dispositif de limitation de déformation (204) est formé par au moins une deuxième moulure (210) de cette couche de tôle métallique (200) qui, dans une vue de dessus de cette couche de tôle métallique (200), entoure au moins de manière pratiquement fermée l'ouverture de chambre de combustion associée (14) et forme sur au moins une partie de sa longueur un méandre au moins pratiquement complet s'étendant dans la direction circonférentielle de l'ouverture de chambre de combustion associée (14) ;
(b) tout autour de l'ouverture de chambre de combustion (14) associée, la constante de rappel de la deuxième moulure (210), mesurée perpendiculairement à cette couche de tôle métallique (200), est partout supérieure à celle de la première moulure (202) ;
(c) tout autour de l'ouverture de la chambre de combustion (24) associée, l'épaisseur totale de cette couche de tôle métallique (200) dans la zone de la deuxième moulure (210) est partout plus réduite que dans la zone de la première moulure (202) ;
(d) la deuxième moulure (210) est disposée entre l'ouverture de chambre de combustion (14) et la première moulure (202) et
(e) dans une vue de dessus de la couche de tôle métallique (200) dans la zone du dispositif de limitation de déformation (204), la surface occupée au total par la deuxième moulure (210) est au moins égale à la moitié de la surface totale du dispositif de limitation de déformation (204).

25. Procédé pour fabriquer un joint de culasse selon une ou plusieurs des revendications précédentes, **caractérisé en ce que** les élévations sont d'abord produites avec une hauteur supérieure à leur hauteur définitive et ensuite sont amenées à leur hauteur définitive par une déformation en retour partielle de la couche de tôle métallique (12) (200) de telle manière que leur section, dans des surfaces cylindriques circulaires (30) coaxiales à l'ouverture de chambre de combustion (14) soit approximativement rectangulaire ou trapézoïdale.
